# EUROPÄISCHE PATENTSCHRIFT

(11) **EP 4 132 314 B1**
(45) Veröffentlichungstag und Bekanntmachung des Hinweises auf die Patenterteilung: **05.03.2025**
(21) Anmeldenummer: 21719077.6
(22) Anmeldetag: 09.04.2021
(51) Int. Cl.: A43B 13/12, A43B 13/18, A43B 1/00, B33Y 80/00

(54) **SCHUHZWISCHENSOHLE UND DAMIT HERGESTELLTER LAUFSCHUH**
FOOTWEAR MIDSOLE AND RUNNING SHOE PRODUCED THEREWITH
SEMELLE INTERCALAIRE D'ARTICLE CHAUSSANT ET CHAUSSURE DE COURSE PRODUITE AVEC CELLE-CI

(30) Priorität: 09.04.2020 DE 102020002235; 22.05.2020 DE 102020003058
(43) Veröffentlichungstag der Anmeldung: 15.02.2023
(73) Patentinhaber: Mankau, Dieter, 60316 Frankfurt am Main (DE)
(72) Erfinder: Mankau, Dieter, 60316 Frankfurt am Main (DE)
(74) Vertreter: Boult Wade Tennant LLP
(86) Internationale Anmeldenummer: PCT/EP2021/059314
(87) Internationale Veröffentlichungsnummer: WO 2021/205006

(56) Entgegenhaltungen:
- US-A- 4 843 737
- US-A- 5 138 776
- US-A1- 2005 000 115
- US-A1- 2017 105 477

## Beschreibung

Die Erfindung betrifft gemäß dem Oberbegriff von Anspruch 1 Schuhzwischensohle für Laufschuhe mit Feder-/Dämpfungselementen.

Bei der Mehrzahl der bekannten Dämpfungssysteme für Laufschuhe besteht keine Abhängigkeit bzw. keine Steuerung der Dämpfungseigenschaften und der Auslenkung speziell der Sohle im Vorfußbereich bzw. unterhalb des Fußballens.

Typische Dämpfungselemente sind aus der GB 2 179 235 A und der US 2015/0 089 834 A1 bekannt. Die US 4 910 884 A zeigt eine Sprungvorrichtung zum Anbringen an den Sohlen von gewöhnlichen Schuhen.

Aus der CN 208 160 162 U ist ein gedämpfter Sportschuh bekannt, bei welchem eine Vielzahl von Federelementen über die gesamte Länge der Sohle verteilt angeordnet sind. Diese bestehen aus jeweils paarweise an der Laufsohle befestigten Federelementen, die über Schubelemente mit der Zwischensohle verbunden sind. Ohne die Laufsohle kann die Zwischensohle nicht vorgefertigt werden und die auf die Zwischensohle wirkenden Kräfte sind ausschließlich vertikal ausgerichtet, was zwar eine gute Stoßdämpfung, aber wenig dynamische Vorteile beim Laufen bringt.

Aus der US 2005/000115 A1 ist eine Schuhzwischensohle für einen Laufschuh bekannt. Weiterer Stand der Technik ist aus der US 2017/105477 A1, der US 5 138 776 A und der US 4 843 727 A bekannt.

Die Aufgabe der vorliegenden Erfindung besteht darin, einen Laufschuh durch Schaffung einer Zwischensohle zu verbessern, die einen weitgehend störungsfreien Wirkzusammenhang von Dämpfung und Laufrhythmus ermöglicht.

Erfindungsgemäß wird die Aufgabe dadurch gelöst, dass an der Unterseite im Vorfußbereich der Schuhzwischensohle ein bügelförmiges Feder-Auftrittselement angeordnet ist, das mit einem ersten Ende am vorderen Ende der Schuhzwischensohle und mit seinem anderen Ende an einem ersten Feder-/Dämpfungselement festgelegt ist, dessen Bewegungsrichtung parallel zur Erstreckung der Schuhzwischensohle liegt, so dass es beim Ausfedern eine Schubkraft auf das Feder-Auftrittselement ausübt.

Die erfindungsgemäße Schuhzwischensohle besitzt zum einen gute Dämpfungseigenschaften, stellt aber mit dem beim Auftreten komprimierten Feder-/Dämpfungselement und dem elastisch verformten Feder-Auftrittselement Energiespeicher zur Verfügung, die sich beim nächsten Schritt entspannen und somit die Energie für den Läufer nutzbar machen. Dieser insbesondere bei einer Anordnung im Bereich des Vorfußes in Erscheinung, d.h. der Fußballen liegt oberhalbe des Feder-Auftrittselements und das Feder-/Dämpfungselement zurückgesetzt hinter dem Fußballen, ggf. auch im Mittelfußbereich.

Die Schuhzwischensohle kann als Einheit vorgefertigt und dann in üblicher Art und Weise in einen Schuh integriert werden, der üblicherweise noch eine Innensohle, eine Außensohle und Obermaterial aufweist. Die Teile können verklebt werden, Hohlräume können ausgeschäumt werden.

Besonders bevorzugt ist eine Ausführungsform der Erfindung, bei welcher zwischen der Schuhzwischensohle und dem Feder-Auftrittselement ein auf Zug beanspruchtes Auslenkungsbegrenzungsband vorgesehen ist, das mit einem ersten Ende am vorderen Ende der Schuhzwischensohle und mit seinem anderen Ende an einem weiteren oder dem ersten Feder-/Dämpfungselement festgelegt ist.

Dieses Auslenkungsbegrenzungsband wird im Gegensatz zu dem Feder-Auftrittselement auf Zug belastet und kann in Zugrichtung elastisch oder starr ausgebildete sein.

Mit dem Auslenkungsbegrenzungs - Band, seinem Energiespeicher aus Metall Druckfedern oder ElastomerßFedern, wird ein sanftes, kein abruptes Stoppen der Sohlenauslenkung, erreicht. Durch die gleichbleibenden Abstoßenergiewerte in Verbindung mit einem gefundenen Lauftempo und Laufrhythmus wird die Laufbewegung fließender und störungsfreier ausgeführt.

Der vorliegenden Erfindung liegt deshalb die Aufgabe zugrunde, ein Dämpfungssystem für Anwendungen im Laufschuhbereich dahingehend weiterzubilden, dass für unterschiedliche Laufstile und Gewichtsklassen von Läufern ein besonders flexibler Einsatz ermöglicht wird.

Vorzugsweise ist vorgesehen, dass das Dämpfungssystem wenigstens aus einem Feder-/Dämpfungselement sowie wenigstens aus einem Auslenkungsbegrenzungs - Band und einem Energiespeicher gebildet wird, wobei der Wirkzusammenhang und die Kopplung zwischen dem Feder-/Dämpfungselement und dem Auslenkungsbegrenzungs - Band über den Energiespeicher erfolgt.

Durch den Abstand den das Auslenkungsbegrenzungs - Band gegenüber der Schuhzwischensohle hat und der verwendeten Shore Härte bzw. der Federkennlinie der Feder im Energiespeicher, wird vorrangig die Auslenkung der Sohle im Vorfußbereich gesteuert. Zusätzliche, aber geringere Einflussfaktoren, haben die Biegehärte der Schuhzwischensohle und der Feder-/Dämpfungselement auf das Auslenkvermögen der Sohle im Vorfußbereich.

Der Energiespeicher kann wahlweise außerhalb des Feder-/Dämpfungselements oder innerhalb bzw. unter dem Feder-/Dämpfungselement angebracht sein.

Durch unterschiedliche Formen, Federhärten, Längen sowie der Bauhöhe des Feder-/Dämpfungselements können unterschiedliche Sohlenkonstruktionen entsprechend differenzierten Anforderungen an einen Laufschuh bereitgestellt werden.

Die einseitige Anbindung des Feder-/Dämpfungselements an der Schuhzwischensole kann entsprechend der unterschiedlich ausgeformten zur Verfügung stehenden Feder-/Dämpfungselement fest oder schwenkbar erfolgen. Für eine schwenkbare Anbringung ist ein Scharnier vorgesehen, wobei der Begriff Scharnier bedeutet, dass die Anbindung mit technisch bekannten unterschiedlichen scharnierähnlichen Ausformungen erfolgen kann. Der Feder-/Dämpfungselement kann unterschiedliche Biegehärten aufweisen und aus unterschiedlichen Kunststoff Materialien bestehen. Vorzugsweise besteht er, wenn kein zusätzliches Dämpfungsmittel wie z.B. Schaumstoff zwischen der Schuhzwischensohle bzw. Auslenkungsbegrenzungs - Band und dem Feder-/Dämpfungselement eingebracht ist, aus Carbon. Werden Dämpfungsmittel wie Schaumstoffe zusätzlich eingebracht, kann der Feder-/Dämpfungselement aus mittelharten spritzgussfähigen Kunststoffen gebildet werden.

Bei dieser technischen Ausformung besteht die Möglichkeit, dass das Feder-/Dämpfungselement und das Auslenkungsbegrenzungs - Band als ein einteiliges zusammenhängendes Element produziert werden kann. Voraussetzung für diese technische Lösung ist, dass eine Abstimmung zwischen der Schaumstoff Härte und der Biegehärte des Feder-/Dämpfungselements erfolgt, damit noch ein Wirkzusammenhang mit dem Energiespeicher gegeben ist. Der Feder-/Dämpfungselement kann in Längsrichtung der Schuhzwischensohle entsprechend der unterschiedlichen Laufschuhanforderungen unterschiedliche Höhenverläufe und Ausformungen aufweisen. Der Feder-/Dämpfungselement kann quer zur Mittelachse der Sohle aus zwei einzelnen Feder-/Dämpfungselementen mit einem gemeinsam zu nutzenden oder aus zwei separaten Energiespeichern gebildet werden. Mit zwei Feder-/Dämpfungselementen und den dazugehörigen Energiespeichern kann der individuelle Laufstil in Verbindung mit der Pronation und Supination stark beeinflusst und korrigiert werden. Der Feder-/Dämpfungselement kann an seiner freien verschiebbaren Seite seitlich unterhalb der Schubkante mindestens zwei Führungselemente besitzen, die auf der Schuhzwischensohle oder in einem an der Schuhzwischensohle befestigten, aus gleitförmigem Kunststoff bestehenden Teil mit Führungsnuten reibungsarm geführt werden um einen Schwimmeffekt zu vermeiden. In Sonderfällen kann in diesem Bereich der Feder-/Dämpfungselement auf mindestens zwei Laufrollen bewegt werden, die vorzugsweise in einer Führungsbahn laufen. Wenn das Auslenkungsbegrenzungs - Band aus Seilen gebildet wird, ist das Führungssystem eine Zwangsführung, die ein Herausklappen des Feder-/Dämpfungselements verhindert. Das Auslenkungsbegrenzungs - Band kann in dem Energiespeicherbereich mit der linken und rechten Rahmenseite in einer Führung, die als separates Teil an der Schuhzwischensohle befestigt ist, geführt werden. Das Führungsteil besteht aus einem Kunststoff mit guten Gleiteigenschaften.

Das Auslenkungsbegrenzungs - Band kann entsprechend spezieller Anforderungen selbstfedernde Eigenschaften haben und aus Carbon bestehen. Für einen alltagstauglichen Laufschuh besteht das Auslenkungsbegrenzungs - Band aus einem Kunststoffgewebe mit angespritzten Bauteilen die für die Befestigung an der Schuhzwischensohle oder direkt am Feder-/Dämpfungselement notwendig sind und auf der gegenüberliegenden Seite der angespritzte Energiespeicher der technisch für unterschiedliche Federnvarianten ausgebildet ist.

Für einen komfortablen einfachen Alltagsschuh kann das Auslenkungsbegrenzungs - Band selbst, an seinem freien Ende, hinter dem Feder-/Dämpfungselement, zur Feder ausgebildet werden und dadurch auf die zusätzliche eingebrachte Feder im Energiespeicher verzichtet werden. Neben der Verwendung von flachen breiten Rechteckquerschnitten für das Auslenkungsbegrenzungs - Band können ein oder mehrere Rundseile oder schmale Bänder mit angepressten oder angespritzten Befestigungsmitteln für die Befestigung an der Schuhzwischensohle und für die Aufnahmen der Feder eingesetzt werden. Die Rundseile oder schmalen Bänder verlaufen in Öffnungen in der Schubkante am Feder-/Dämpfungselement und sind hinter der Schubkante mit entsprechende Aufnahmemittel für die Aufnahme von Druckfedern ausgeformt. Wenn über die Feder mechanisch die Federhärte verändert werden soll, ist ein Begrenzungsanschlag für den Feder-/Dämpfungselement am Auslenkungsbegrenzungs - Band notwendig um keinen Einfluss auf die Krümmung des Feder-/Dämpfungselements vorzunehmen. Ohne Begrenzungsanschlag am Auslenkungsbegrenzungs - Band kann mittels mechanischer Verstelleinrichtung die Druckfeder verschoben werden und dadurch die Höhe bzw. die Krümmung des Feder-/Dämpfungselements verändert werden, wobei die Federkennlinie unverändert bleibt.

Für unterschiedliche Laufschuhkonzepte sind verschiedene Feder-/Dämpfungselement vorgesehen. Für einen Vorfußläufer kommt vorzugsweise die gekrümmte Flachfederausformung für das Dämpfungssystem zum Einsatz. Für einen Mittelfußläufer ist die Kombination einer gekrümmten Flachfeder mit einem bogenförmigen Abschnitt im Befestigungsbereich an der Sohle vorgesehen. Das Dämpfungssystem mit einem innerhalb bzw, unter dem Feder-/Dämpfungselement angebrachten Energiespeicher hat den technischen Vorteil, dass der Feder-/Dämpfungselement mit seinen zwei bogenförmigen Abschnitten, die durch einen gekrümmten Flachfederabschnitt miteinander verbunden sind, auch vorteilhaft im Mittelfuß - und Fersenbereich eingesetzt werden kann. Bei einer flachen Bauweise und den Einsatz von zusätzlichen Dämpfungsmitteln wie zBs. viscoelastischen Schaumstoffen zwischen der Schuhzwischensohle bzw. dem Auslenkungsbegrenzungs - Band und den einzelnen Feder-/Dämpfungselement kann ein komfortabler Laufschuh für den Alltag realisiert werden.

Vorzugsweise wird ein Wirkzusammenhang aller bestehenden Einzelkomponenten, die im neuen Schuhzwischensohlen Konzept eingesetzt werden, hergestellt.

Die Schuhzwischensohle ist in Längsrichtung druckstabil im Vorfußbereich federnd ausgebildet. Der Mittel - und Hinterfuß Bereich ist in der Härte durchgehend stabiler und in der Federwirkung härter als im Vorfußbereich.

Zusätzlich zur bereits gespeicherten Energie im Feder-/Dämpfungselement die durch die Stoßbelastung und der entsprechenden Durchbiegung des Feder-/Dämpfungselements entsteht, wird die daraus resultierende Längenverschiebung des Feder-/Auftrittelementes an seinem frei beweglichen Ende, in einem Energiespeicher eingebracht, wobei der Schiebedruck des Feder-/Dämpfungselements auf die Elastomer- oder Metall Druckfeder im Auslenkungsbegrenzungs - Band wirkt und diese komprimiert. Die Druckfedern können produktionsseitig entsprechend den Laufschuhauslegungen mit Federn unterschiedlicher Shore - Härte oder entsprechenden Federkennlinien mit entsprechenden Dämpfungseigenschaften eingesetzt werden.

Unter dem Feder-/Dämpfungselement können Dämpfungsmittel aus unterschiedlichen bekannten Materialien und Technologien mit den entsprechenden Dämpfungseigenschaften angeordnet werden. Die Dämpfungsmittel können bei einem breiten Auslenkungsbegrenzungs - Band nur zwischen dem Feder-/Dämpfungselement und dem Auslenkungsbegrenzungs - Band eingebracht sein oder wenn das Auslenkungsbegrenzungs - Band aus Zugseilen gebildet wird auch zwischen dem Feder-/Dämpfungselement und der Schuhzwischensohle.

Der Feder-/Dämpfungselement ist entsprechend der Anforderungen von verschiedenen Laufstilen auch unter dem Vor- Mittel- und Hinterfuß Bereich angeordnet. Auf einer Seite ist das Auftrittselement fest, steck - oder schwenkbar mit der Schuhzwischensohle verbunden. Auf der gegenüberliegenden freien Seite ist es mit dem Auslenkungsbegrenzungs - Band über den Energiespeicher verbunden. Bei einer Stoßbelastung auf dem Feder-/Dämpfungselement gibt es in Längsrichtung der Sohle eine longitudinale Verschiebung des Feder-/Dämpfungselements an seiner Schiebekante die mit dem Auslenkungsbegrenzungs - Band über den Energiespeicher gekoppelt ist und auf die im Energiespeicher eingesetzte Druckfeder Druck ausübt. Die feste Verbindung einer Seite des Feder-/Dämpfungselements mit der Schuhzwischensohle kann durch ein Schwenkscharnier, stabiles Filmscharnier oder durch Steckverbindungen, Kleben, Nieten, Schrauben oder Verschweißen erfolgen.

Die Dämpfungsmittel können vorzugsweise aus bekannten PU-Schäumen mit unterschiedlicher Shore - Härte und viscoelastischen Eigenschaften gebildet werden. Entsprechend heutigen vorhandenen technologischen Lösungen von Dämpfungsmitteln ist es denkbar, dass andere Dämpfungsmittellösungen als die von PU Schäumen eingesetzt werden können.

Der Feder-/Dämpfungselement in Verbindung mit dem Energiespeicher und einer im Vorfußbereich federnden Schuhzwischensohle, ist vorrangig ein Energiespeicher, der die Stoßenergie des Läufers speichert und diese Energie dem Läufer wieder zur Verfügung stellt.

Bei einer Stoßdruckbeaufschlagung des Feder-/Dämpfungselements wird ein Teil der Energie im Feder-/Dämpfungselement, im Energiespeicher, der Schuhzwischensohle und wenn das Auslenkungsbegrenzungs - Band selbst aus einem Federstab gebildet wird im Auslenkungsbegrenzungs
- Band gespeichert. Wird das Dämpfungsstrukturelement auch im Mittel -oder im Hinterfuß Bereich eingesetzt wird die Abstandshöhe vom Auslenkungsbegrenzungs - Band und der Schuhzwischensohle stark reduziert, da bis auf eine minimale Auslenkungsbegrenzung im Fersenbereich die Auslenkungsbegrenzung speziell im Mittelfußbereich eine untergeordnete Rolle spielt. Es ist denkbar, dass das Dämpfungsstrukturelement für Schuhe für den alltäglichen Gebrauch speziell im Vor- und Hinterfußbereich aus je zwei Dämpfungsstrukturelementen die quer zur Schuhmittelachse angeordnet sind gebildet werden. In Sonderfällen können speziell ausgeformte Einzelelemente für Laufstilkorrekturen oder Stollen für den Rasensport direkt an die Feder-/Dämpfungselement angebracht werden. Werden z.B. nur im Vorfuß- oder im Vor- und Mittelfuß Feder-/Dämpfungselement an der Schuhzwischensohle angebracht, sind die freibleiben Bereiche mit bekannten Laufsohlen Sohlenausformungen zu schließen.

Diese Erfindung umfasst keine ganzheitliche Designlösung von Laufschuhen. Sie bietet eine neue Dämpfungsstruktur, die an Schuhzwischensohlen angebracht werden kann.

Der heutige technische Standard im Sportschuhbereich für die Herstellung von durchgehenden Laufsohlen mit hoher elastischer Verformbarkeit aus bekannten technischen Schäumen kann als Stand der Technik betrachtet werden.

Die unterschiedlichen Laufstile wie Vor- Mittel- und Hinterfuß Laufstil erfordern unterschiedliche konstruktive / kinematische Auslegungen der Sohle sowie der Dämpfung des Fußes. Der Hinterfuß Lauf benötigt ein extra gutes Dämpfungssystem.

Die Stoßrichtung beim Fußaufsetzen geht direkt in die Gelenke und Wirbelsäule, Es besteht eine geringe Nutzung des körpereigenen Dämpfung Apparates und eine leichte Bremswirkung beim Laufen. Der gängigste Laufstil ist der Mittelfußlauf. Fußballen und Ferse werden beim Aufsetzen des Fußes gleichmäßig belastet. Der Neigungswinkel des Läufers ist bei diesem Laufstil leicht nach vorn gerichtet. Die Abrollenergie wird gleichmäßig ins Bein übertragen. Die Kraft des Aufpralls wird über das Bein in Hüfte und Rücken abgeleitet. Die Schrittfrequenz spielt eine deutliche Rolle für das Abrollverhalten und für die Stoßbelastung des Fußes. Beim Vorfußläufer ist der Neigungswinkel stark nach vorn geneigt. Die besten körpereigenen Dämpfungseigenschaften hat der Läufer beim Vorfußlaufen. Der erste Bodenkontakt findet auf den Fußballen statt. Die Wadenmuskulatur und die Achillessehne spannen sich, das Fußgewölbe streckt sich. Beim Abdruck wird ein großer Teil der in der Muskulatur und Sehnen verbleibenden Energie wieder freigegeben. Das bedeutet, dass ein Teil der kinetischen Energie des vorherigen Schrittes in den folgenden Schritt wieder zurückgegeben wird. Der Nachteil beim Vorfußlauf ist, dass die Muskulatur stark belastet wird. Der Wadenbereich und die Fußmuskulatur müssen mehr leisten als beim Mittelfuß -und Fersenlauf. Vor - Mittelfußläufer benötigen weniger Dämpfung, dafür kann der Laufvortrieb erhöht werden

Die Federeigenschaften der Sohle werden teilweise wichtiger als die Dämpfung. Weiche bis mittelfeste Sohlen werden oft aus geschäumten Kunststoffen hergestellt. Meistens wird über eine unterschiedliche Sohlendicke ein differenziertes Kompressionsmodul für die Schuhsohle festgelegt. Zusätzlich können durch Hohlräume oder Aussparungen in der Sohle, Funktionen wie z.B. Bereichsabgrenzungen zwischen Vor Fuß und Hinterfuß in der Sohle realisiert werden. In der Regel werden für die Dämpfung weiche Schäume, Luft - oder Gel -Polster Einlagen eingesetzt. Die Dämpfungsstoßrichtung ist meistens senkrecht zur Laufsohle. Wenn die Stabilität der Sohle zunimmt, nehmen die stoßdämpfenden Eigenschaften der Sohle ab. Stabilitätseigenschaften und stoßdämpfende Eigenschaften sollten idealerweise im Gleichklang sein. Ein bedeutender Einflussfaktor ist das unterschiedliche Gewicht der Nutzer bei gleicher Schuhgröße. Die für diese Schuhgröße produktionsseitig festgelegten Parameter von Härte und Dämpfung können auch bei idealer Auslegung der Konstruktion die großen Gewichtsunterschiede der Laufschuhnutzer nicht kompensieren

Die vorliegende Erfindung betrifft weiterhin eine Zwischensohlenkonstruktion die in ihrer biomechanischen Auslegung eine signifikant deutliche Verbesserung der stoßdämpfenden Eigenschaften durch eine Kombination von Energie speichernden Feder Auftrittselementen, Dämpfungsstrukturelementen und einer gekoppelten Vorrichtung für eine individuelle Härte -und Dämpfungseinstellung ermöglicht.

Diese Faktoren haben einen starken Einfluss auf das Abrollverhaltendes des Laufschuhes.

Die Aufgabe wird gelöst durch einen Schuhzwischensohlenaufbau mit einem oder mehreren Feder-/Auftrittelementen mit darunterliegenden Dämpfungsstrukturelementen und einem Härte - Dämpfung - System mit dem individuell Dämpfung - und Härteparameter verändert werden können. Der Begriff Härte-Dämpfer-System steht synonym für Feder-Dämpfungselement. Zusätzlich zur bereits gespeicherten Energie, die durch die Stoßbelastung und die entsprechende Durchbiegung des Feder Auftrittselement entsteht, wird die daraus resultierende Längenverschiebung des Feder-/Auftrittelements an seinem frei beweglichen Ende, in ein Härte - Dämpfung - System eingebracht, wobei der Schiebedruck des Feder-Auftritt-Elementes auf die Elastomer Druckfeder wirkt und diese komprimiert. Die Elastomer Druckfedern können gegen Federn mit unterschiedlicher Shore - Härte mit entsprechenden Dämpfungseigenschaften gewechselt bzw. getauscht werden. Alternativ können statt Elastomer Druckfedern Stahldruckfedern eingesetzt werden. Statt Druckfedern können auch Elastomer Zugfedern, die unterhalb des Feder-/Auftrittelementes angeordnet sind, zum Einsatz kommen.

Die Dämpfungs-und Härteelemente verstärken in ihrer biomechanischen Funktion, die Abrollbewegung des Fußes und geben die gespeicherte Energie, die durch einen Fußauftritt und der damit einhergehenden Stoßbelastung auf die Feder Auftritts Elemente entsteht und zusätzlich in einer Druckoder Zugfeder in Form von Energie zwischengespeichert wird, dem Läufer In der nachfolgenden Schrittsetzung als zusätzliche Energie für den Vortrieb wieder zurück. Das Feder-/Auftrittelement kann unterschiedliche Federkennlinien sowie unterschiedlich gestaltete Federformen für den Einsatz in verschiedenen Laufschuhauslegungen haben. Ein vorgesehenes Feder-/Auftrittelement entspricht in der technischen Auslegung einer gekrümmten Flachfeder. Eine andere Feder Auftrittsvariante wird aus einer Kombination einer Bügel- und einer gekrümmten Flachfeder gebildet. Ein drittes ist eine doppelwirkende Flachfeder, die für das Gehen und Sprinten ausgelegt ist. Alle Varianten haben eine progressive Federkennlinie die durch das Härte - Dämpfung - System mit entsprechendem Druck - oder Zugfedern noch verstärkt werden kann. Ein starker Wirkzusammenhang besteht bei einer Stoßbelastung auf die Druck- oder Zugfeder im Härte - Dämpfung -System bei dem Feder-/Auftrittelement mit der gekrümmten Flachfeder Charakteristik. Die Befestigung der Feder-/Auftrittelemente auf der gegenüberliegenden Seite vom Härte - Dämpfung -System an der Schuhzwischensohle ist daher unterschiedlich. Das Feder-/Auftrittelement mit der gekrümmten Flachfeder Charakteristik wird an der vorderen oder hinteren Befestigungsstelle an der Schuhzwischensohle fest, jedoch wahlweise schwenk - oder drehbar angebracht. Es kann in eine Aufnahmeführung vorn oder im Fersenbereich an der Schuhzwischensohle gesteckt und eingeklebt werden oder in ein Elastomer Aufnahmelager eingebracht sein, das in die Aufnahmeführungen an der Schuhzwischensohle fest verankert wird. Das Feder-/Auftrittelement in der Kombination einer Bügel - und gekrümmten Flachfeder wird vorzugsweise fest mit der Schuhzwischensohle verbunden.

Drei unterschiedliche Laufschuh Konstruktionen sind werksseitig bis auf die verwendeten Druck- oder Zugfedern im Härte Dämpfung System vorgegeben. Einen Hinterfuß Laufschuh für ein normales ruhiges Laufen, einen Mittelfuß Laufschuh für ein sportliches Laufen und einen Vorfußlaufschuh für den Hochleistung Laufsport.

Die Schuhzwischensohle selbst bleibt konstruktiv für alle Gewichtsklassen einer Schuhgröße unverändert und ist produktionsseitig vorgegeben. Verschiedene Kombinationen und Anordnungen von Feder-/Auftrittelementen und Dämpfungsstrukturelementen für unterschiedliche Laufstile, mit der Möglichkeit einer späteren individuellen Anpassung, werden ebenfalls produktionsseitig vorgegeben. Die Feinabstimmung von Härte, Nachgiebigkeit und Dämpfung erfolgt durch das Auswechseln von Elastomer oder Stahl Druck und Zugfedern mit unterschiedlichen Härtegraden und Dämpfungsvermögen im Härte Dämpfung System.

Die Schuhzwischensohle ist in Längsrichtung druckstabil im Vorfußbereich federnd ausgebildet. Der Mittel - und Hinterfuß Bereich ist in der Härte durchgehend stabiler und in der Federwirkung härter als im Vorfußbereich. Für alle Laufschuhkonstruktionen ist eine geringe "Sprengung" vorgesehen, bis auf die Ausnahme der erhöhten mittleren Feder-/Auftrittelemente, damit in allen sportlichen Disziplinen ein ökonomisches Laufen möglich ist.

Unter den federnden Feder Auftritts Elementen können Dämpfungsstrukturelemente aus unterschiedlichen bekannten Materialien und Technologien mit den entsprechenden

Dämpfungseigenschaften angeordnet werden. Konstruktiv sind die Dämpfungsstrukturelemente so ausgelegt, das eine Verschiebung in tangentialer und senkrechter Richtung möglich ist aber eine Querverschiebung weitgehendste verhindert wird. Mit dieser technischen Ausformung der Dämpfungsstrukturelemente wird ein Schwimmeffekt vermieden. Die Dämpfungsstrukturelemente können vorzugsweise in 3 D Druck aus TPU oder Silikon mit unterschiedlicher Shore Härte und Viskoelastizität hergestellt werden. Große offenporige oder zusammenhängende räumliche Strukturen sind besonders leicht und in ihrem Dämpfungsvermögen besonders effektiv. Räumliche Dämpfung Strukturen können z.B. in abgewandelter Form von sechseckigen Wellenfedern die in einem Waben Verbundsystem zusammengefasst sind, das Dämpfungsstrukturelement bilden. Durch die Anzahl der Windungen der Wellen sowie die Wellengrößen können differenzierte Härte und Dämpfungseigenschaften realisiert werden. In Sonderfällen können dem professionellen Läufer Schuhe zur Verfügung gestellt werden, die keine eingebrachten Dämpfungsstrukturelemente besitzen, sondern dem Läufer eine freie Wahl belassen, auch andere Dämpfungssysteme wie Gele, Flüssigkeiten oder Luft zu nutzen. Theoretisch können auch die anderen Baugruppen oder deren Einzelteile als lose Teile dem Sportler zur Verfügung gestellt werden.

Damit bei einer Durchbiegung der Feder Auftritts Elemente die Dämpfungsstrukturelemente nicht zu stark komprimiert werden, befinden sich an der Sohle unter den Feder-Auftritts -lementen, streifenförmige, quer zur Mittelachse verlaufend, Erhebungen, die die Durchbiegung begrenzen und einen Schwimmeffekt beim Abstoßen vermeiden. Diese Höhendurchbiegungsbegrenzungen können auch am Feder Auftritts Element angebracht sein. Alternativ können im Dämpfungsstrukturelement selbst, Abstandselemente eingebracht werden, die eine festgelegte Durchbiegungsbegrenzung für das Feder-/Auftrittelement festlegen. Diese bestehen vorteilhaft aus mittelharten Elastomer Druckfedern und können zylindrisch, streifenförmig, mit konkaven, konvexen oder mit anderen Freiformverläufen ausgeformt sein. Die streifenförmig ausgeformten Abstandselemente verlaufen quer zur Mittelachse und die zylindrisch geformten Elastomer Federn sind auf der Mittelachse oder als Paar links und rechts der Mittelachse zwischen dem Feder Auftritts Element und der Schuhzwischensohle, angeordnet. Ein konvex ausgeformter streifenförmiger, quer zur Mittelachse verlaufender Steg hat den Vorteil, dass beim Kurvenlauf oder bei einer starken seitlichen Fußneigung das Prinzip der "Neigetechnik" mit hoher Standfestigkeit für den Läufer erreicht wird.

Die Feder Auftritts Elemente sind entsprechend der Anforderungen der verschiedenen Laufstile unter dem Vor- Mittel- und Hinterfuß Bereich angeordnet. Sie sind vorgespannt und bilden einen Bogen. Auf einer Seite ist das Auftrittselement fest, steck - oder schwenkbar mit der Schuhzwischensohle verbunden. Auf der gegenüberliegenden freien Seite führt ein breiter Führungsstreifen in das Härte - Dämpfung -System mit den auswechselbaren Elastomer Druckfedern. Bei einer Stoßbelastung auf das federnde Auftrittselement gibt es in Längsrichtung der Sohle eine longitudinale Verschiebung des federnden Auftrittselementes das mit den breiten Führungsstreifen in ein Härte- Dämpfung- Verstell System auf eine Elastomer Feder Druckfeder drückt. Die feste Verbindung einer Seite des Auftritt Elementes mit der Schuhzwischensohle kann durch ein stabiles Filmscharnier oder durch Steckverbindungen, Kleben, Nieten, Schrauben oder Verschweißen erfolgen. Vorzugsweise erfolgt diese feste Anordnung zBs. für den Vorfußlaufschuh an der Vorfußspitze der Schuhzwischensohle. Die Vorfußspitze der Schuhzwischensohle ist in der Regel weiter nach vorn gezogen, damit ein optimaler Wirkungsgrad für die Durchbiegung des Feder-/Auftrittelement gegeben ist.

Das Feder-/Auftrittelement kann in Längsrichtung der Sohle aus, zwei oder drei nebeneinander angeordneten Feder-/Auftrittelementen gebildet werden. Diese Teilung erlaubt eine starke Korrektur der Pronation bzw. Überpronation durch unterschiedliche Federhärten der einzelnen Feder-/Auftrittelemente oder durch unterschiedliche Shore - Härten der eingesetzten Elastomer Druckfedern im Härte - Dämpfung -System. Eine alltagstaugliche Korrektur kann auch durch einen sich verändernden Querschnittsverlauf im Feder Auftrittselement quer zur Mittelachse der Sohle erreicht werden. Das Feder-/Auftrittelement kann durch wellenförmige Einschnürungen quer zur Mittelachse druckpunktelastische Eigenschaften bekommen. Diese Einschnürungen ermöglichen eine Durchbiegung des Feder-/Auftrittelement in Längsrichtung der Sohle auch bei unterschiedlichen quer zur Mittelachse bestehenden Krümmungsverläufen. Das Material für das federnde Auftrittselement wird vorzugsweise aus Carbon gebildet.

Im Kunststoffspritzguss Verfahren hergestellte Feder-/Auftrittelemente sind mit entsprechenden Anteilen von Kohlefasern, für mittlere Belastungen ebenfalls geeignet.

Für Freizeitlaufschuhe können die Feder-/Auftrittelemente in Verbindung mit härter ausgelegten Dämpfungsstrukturelementen aus mittelelastischem Kunststoff gebildet werden.

Das Härte - Dämpfung - System ist ein separates Einzelteil, das an die Schuhzwischensohle geklebt, geschweißt, angeschraubt oder in eine bestehende Führung an der Schuhzwischensohle eingeschoben werden kann. Besteht die Schuhzwischensohle aus einem Kunststoffspritzgussteil kann das Härte - Dämpfung - System mitangespritzt werden. Es können im Härte - Dämpfung- System unterschiedliche Elastomer Federn mit unterschiedlicher Shore - Härte mit unterschiedlichen viskoelastischen Eigenschaften nachträglich vom Kunden oder im Fachgeschäft gewechselt werden. Durch die Wahl von unterschiedlichen Shore - Härten und Dämpfungseigenschaften der Druck - oder Zugfedern kann bei einer Schuhgröße auf ein unterschiedliches Gewicht der Läufer reagiert werden und eine individuelle Laufanpassung vorgenommen werden. Bei der Verwendung von härteren Elastomer Federn können zBs. schwerere Läufer besser auf das Gesamtsystem "Schuh", eingestellt werden. Eine mechanische Verschiebung der Elastomer-Federn kann auch durch die Verwendung bekannter technische Prinzipien, die für die Bildung eines Härte - Dämpfung - System geeignet sind, erreicht werden, um eine höhere Kompression und damit größere Härte der Elastomer Feder zu erreichen. Das Härte - Dämpfung - System kann, wenn es an die Schuhzwischensohle angeschraubt wird, Längsschlitze oder mehrere Bohrungen besitzen, die eine unterschiedliche Positionierung des Härte - Dämpfung - System auf der Längsachs der Schuhzwischensohle erlaubt. Idealerweise ist die Schuhzwischensohle so konstruiert, dass sie die bekannten ergonomischen Anforderungen für eine Laufsohle besitzt. Eine Veränderung dieser allgemeinen Parameter besteht im Vorfußbereich der Sohle die in Kombination mit dem Feder-/Auftrittelement als zusätzliche Feder wirkt. Durch den Einsatz von in der Härte und Dämpfung unterschiedlichen Feder-/Auftrittelementen und den Dämpfungsstrukturelementen, die zwischen dem Feder-/Auftrittelement und der Schuhzwischensohle angebracht sind, und mit den in der Shore - Härte und Dämpfungseigenschaften unterschiedlich verfügbaren Elastomer Federn im Härte - Dämpfung - System, können sehr unterschiedliche Anforderungen an einen Laufschuh realisiert werden. Das federnde im Vorfußbereich angeordnete Feder-/Auftrittelement in Verbindung mit dem Härte - Dämpfung - System und einer im Vorfußbereich federnden Schuhzwischensohle, ist vorrangig ein Energiespeicher der die Stoßenergie des Läufers speichert und diese Energie dem Läufer wieder zur Verfügung stellt.

Bei einer Stoßdruckbeaufschlagung des Feder-/Auftrittelementes geht ein Teil der Energie in das Härte - Dämpfung - System, in die Druck - oder Zugfeder, ein Teil kann, wenn die Sohle im Vorfußbereich als Feder ausgebildet ist, diese vorspannen und zusätzlich die Vorwärtsbewegung des Läufers unterstützen. Die vertikalen Kräfte werden in eine horizontale Beschleunigung transferiert. Für einen Mittelfußläufer ist die Anordnung und Anzahl der Feder-/Auftrittelemente anders als die bei einem Vorfußläufer. Für einen Mittelfußläufer ist neben dem im Vorfußbereich angeordneten Feder-/Auftrittelement ein zweites Feder-/Auftrittelement im Fersenbereich vorgesehen. Vorteilhaft für einen sportlichen Läufer ist ein drittes federndes Auftrittselement im Mittelfußbereich das etwas höher herausragt als das im Vor - und im Hinterfuß angeordnete Feder-/Auftrittelement. Auch der Vorfußläufer hat durch diese Anordnung der federnden Auftrittselemente keine Nachteile im Laufverhalten. Das Feder Auftritts Element für den Mittelfußbereich kann auch ohne eigenes Härte - Dämpfung -System eingebracht werden, indem es mittig, an dem vorderen und hinterem Feder-Auftrittselement auf mittiger Höhe der Feder-/Auftrittelemente befestigt wird. Je nach Federhärte und Ausformung des mittleren Feder/Auftrittselementes entsteht ein Wirkzusammenhang zwischen allen drei Feder Auftrittselementen. Die Befestigung kann mittels Filmscharnier, Scharnier, Nieten, Kleben, Steckverbindung oder produktionsseitig im gleichen Werkstoff erfolgen. Die Federhärte und Ausformung des mittleren Feder Auftritts Elementes wird durch den Laufstil und Einsatzort des Schuhes bestimmt. Bei besonderen sportlichen Laufeinsätzen wie zBs. einem Langstrecken Lauf auf befestigten glatten Straßen, kann auf ein Dämpfungsstrukturelement unter dem mittleren Feder Auftrittselement verzichtet werden Ein Laufschuh für den Fersenläufer entspricht im Wesentlichen dem eines Vorfußläufers, wobei das Feder-/Auftrittselement im Fersenbereich eine deutlich stärkere Dämpfung als die Mittel - und Vorfußläufer benötigen. Die meisten Läufer landen auf der Ferse und rollen über den Vorfuß ab. Um eine optimale Dämpfung zu realisieren kann alternativ das Härte - Dämpfung -System oberhalb der Sohle im Fersenbereich angeordnet werden. Das Feder-/Auftrittselement im Hinterfuß kann für besondere sportliche Anwendungen druckpunktelastische Eigenschaften besitzen, die durch wellenförmige Einschnürungen quer zur Mittelachse realisiert werden können.

Für den sportlichen Einsatz haben die Feder-/Auftrittelemente auf ihrer dem Boden zugeneigten Unterseite einen Laufsohlenbelag mit hoher Haftreibung. Die Strukturierung und Ausformung des Belages ist erfahrungsgemäß so gewählt, dass diese den spezifischen Anforderungen für den jeweiligen sportlichen Einsatz entspricht. Sonderlaufsohlenbelege die z.B. von dem produktionsseitig vorgegebenen Höhenverlauf der Feder-/Auftrittelemente abweichen, können im 3 D Druck individuell gefertigt werden und an den individuellen Laufstil der Läufer angepasst werden. Darüber hinaus kann das Grunddämpfungsvermögen im Fersen- oder Vorfußbereich durch die Setzung neuer Auflage - oder Abrollpunkte feinjustiert werden.

Es ist denkbar das bekannte Klettverbindungen für die Befestigung der Laufsohle auf dem Feder-/Auftrittselement oder der Schuhzwischensohle eingesetzt werden, um eine differenzierte Anpassung für unterschiedliche sportliche Anforderungen mit wenig Aufwand durchzuführen.

Der Sohlenbelag ist mitbestimmend für den jeweiligen Einsatz der Schuhe. Das Spektrum reicht vom Fußballschuh, der mit Stollen bestückt ist, bis hin zu Schuhen, die für verschiedene Hallensportarten eingesetzt werden. Dadurch, dass bei schrägem Fußauftritt der Schuh eine leichte Querneigung zulässt, ist eine sicherere Standfestigkeit und bessere Bodenhaftung des Schuhs für den Sportler gegeben. Für den sportlichen Alltagsgebrauch ist produktionsseitig eine durchgehende Laufsohle mit hoher elastischer Verformbarkeit aus bekannten technischen Schäumen, die sich im Sportschuhbereich bewährt haben einzusetzen, wobei Aussparungen, die verschlossen werden können, in den Bereichen vorgesehen sind, an denen sich die Härte - Dämpfung -Systeme befinden. Es können auch einzelne Bereiche wie zBs. der Mittelfußbereich oder der Fersenbereich mit einer Teillaufsohle ergänzt bzw. geschlossen werden. Die durch Kompression in der Laufsohle verursachten Verformungen in tangentialer und vertikaler Richtung, werden durch faltenbalgähnliche Ausformungen im Seitenbereich der Laufsohle spannungsfrei abgetragen.

Eine unterschiedliche Höhe der einzelnen Feder-/Auftrittelemente kann die einzelnen Laufstile stark beeinflussen. Ist das im Mittelfuß angeordnete Feder-/Auftrittselementhöher als das vordere Feder-/Auftrittelement, entsteht eine stärkere Neigung des Körpers nach vorn, die in Verbindung mit dem vorderen Feder-/Auftrittselementzu einer beschleunigten Abrollbewegung und Vorwärtsbewegung führt. Der biomechanische Vorteil ist, dass die Abstoßenergie beim Laufen nicht allein über den Vorfuß aufgebracht wird, sondern bei dieser Anordnung stärker als sonst auch aus dem Mittelfußbereich und im geringen Anteil, wenn ein Feder-/Auftrittselementals Brücke zwischen den vorderen und hinteren Feder-/Auftrittelementen angeordnet ist, auch aus dem Hinterfußbereich. Das gleiche gilt auch für unterschiedliche Höhen - und Querverläufe der Laufsohle, bezogen auf den Höhenverlauf der verwendeten Feder-/Auftrittelemente.

Das technische Grundprinzip ist neben der Anwendung im Sportschuhbereich auch für Anwendungen, denkbar, die physikalisch ähnliche Anforderungen an ein Härte - und Dämpfungssystem stellen. Beispielhaft könnte unter einer Ski Bindungsplatte oder unter einer Snowboardbindung dieses System eingesetzt werden. Neben dem sportlichen Einsatz sind auch Anwendungen für normale Laufschuhe, für Menschen, die beruflich häufig Lasten tragen und viele Laufmeter zurücklegen, angedacht. Das für den jeweiligen Verwendungszweck das Gesamtsystem konstruktiv überarbeitet und angepasst werden muss tangiert den vorliegenden Wirkzusammenhang nicht.

Die Erfindung soll nachfolgend anhand von Ausführungsbeispielen im Zusammenhang mit Zeichnungen, die als Prinzip Darstellungen ausgeführt sind, näher erläutert werden, wobei die Erfindung nicht auf die dargestellte Ausführungsform beschränkt ist. Es zeigen
Fig. 1 ist eine Seitenansicht einer Schuhzwischensohle mit nach oben gespannter Schuhzwischensohle im Vorfußbereich, einem im Bereich des Vorfußes angeordneten
   Feder-Auftrittselement, einem nicht mit abgebildeten Dämpfungsstrukturelement und einem Härte - Dämpfungs-System das im Mittelfußbereich angeordnet ist.
Fig. 2 ist eine Unteransicht von Fig. 1
Fig. 3 ist eine Seitenansicht einer Schuhzwischensohle mit einem im Vor- und Hinterfuß angeordneten Feder-/Auftrittselement mit einem Dämpfungsstrukturelement im Vorfußbereich einem nicht abgebildeten Dämpfungsstrukturelement im Hinterfuß Bereich und zwei dazu gehörige Härte -Dämpfung -Systeme.
Fig. 4 ist eine Unteransicht von Fig. 3
Fig. 5 ist eine Unteransicht von Fig. 6

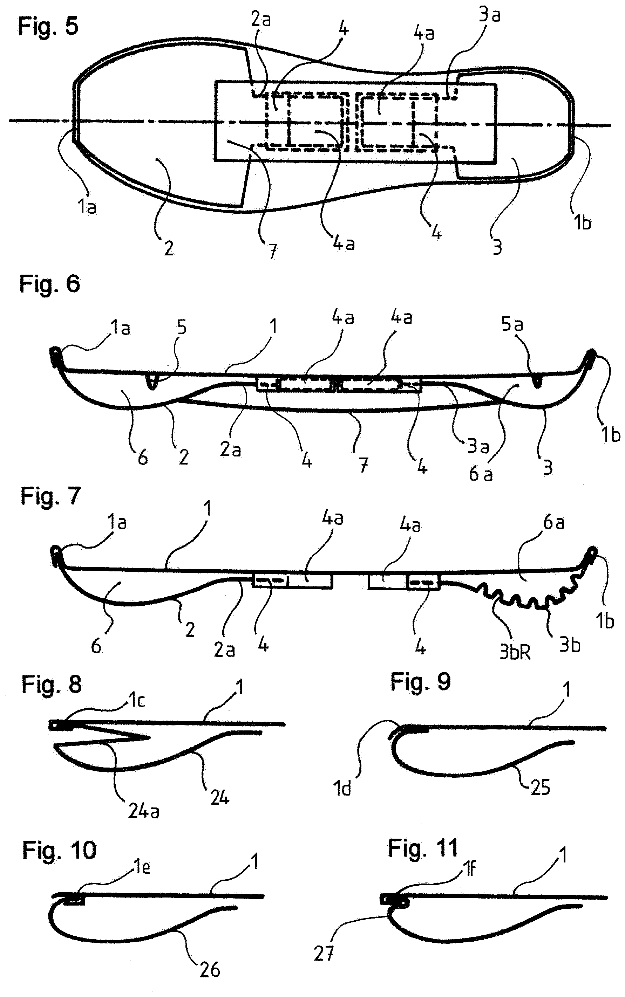

Fig. 6 ist eine Seitenansicht einer Schuhzwischensohle mit einem im Vor- und im Hinterfuß Bereich angeordneten Feder Auftritts Element mit Dämpfungsstrukturelement im Vorfußbereich und einem nicht abgebildeten Dämpfungsstrukturelement im Hinterfuß Bereich, dem dazu gehörigen Härte -Dämpfung - System und einem Feder-/Auftrittselement ohne eigenes Härte -Dämpfung- -System, das am Vorderen - und Hinteren Feder-/Auftrittelement, den Mittelfußbereich überbrückend, fest aber beweglich angebracht ist und zwei Abstandshalter die unterhalb der Schuhzwischensohle und den Feder-/Auftrittelementen, angebracht sind.
Fig. 7 ist eine Seitenansicht einer Schuhzwischensohle mit einem im Vorfußbereich angeordneten Feder-/Auftrittselementmit einem nicht abgebildeten Dämpfungsstrukturelement und einem Härte - Dämpfung - System, einem im Hinterfuß Bereich angeordneten wellenförmig ausgeformten Feder-/Auftrittelement, einem nicht abgebildeten Dämpfungsstrukturelement und das Feder-/Auftrittselement an der Schuhzwischensohle im hinteren Fersenbereich oberhalb der Schuhzwischensohle fest in einem flexiblen Elastomer Lager eingebracht ist und mit der gegenüberliegenden Seite im Mittelfuß Bereich der Schuhzwischensohle in ein Härte -Dämpfungs- -System verschiebbar verläuft.
Fig. 8 ist eine Seitenansicht als Detail eines doppelwirkenden Feder-/Auftrittselementdas im Vor - und oder Hinterfuß Bereich angeordnet ist, unterhalb der Schuhzwischensohle, an der Sohlenspitze bzw. im Fersenbereich fest in eine Aufnahmeführung gesteckt ist.
Fig. 9 ist eine Seitenansicht als Detail einer Schuhzwischensohle mit einem im Vor - und oder Hinterfuß Bereich angeordneten bogenförmig ausgebildeten Feder-/Auftrittselementdas unterhalb der Schuhzwischensohle an der Sohlenspitze bzw. im Fersenbereich fest mit der Sohle verbunden ist.
Fig. 10 ist eine Seitenansicht eines Feder-/Auftrittelementes wie Fig. 9 das jedoch unterhalb der Schuhzwischensohle an der Sohlenspitze fest in einem flexiblen Elastomer Lager eingebracht ist
Fig. 11 ist eine Seitenansicht als Detail einer Schuhzwischensohle mit einem im Vor - und oder Hinterfuß Bereich angeordneten bogenförmig ausgebildeten Feder-/Auftrittselementdas unterhalb der Schuhzwischensohle an der Sohlenspitze bzw. im Fersenbereich fest mit der Sohle verbunden ist.
Fig.12 ist eine Unteransicht einer Schuhzwischensohle mit einem im Vorfuß angeordneten Feder-/Auftrittselementdas in Längsrichtung zur Schuhzwischensohle zweigeteilt ist und im Mittelfuß Bereich der Schuhzwischensohle zwei nebeneinanderliegende Härte -Dämpfung- Systeme angeordnet sind.
Fig. 13 ist eine Seitenansicht einer Schuhzwischensohle mit einem im Vor- und Hinterfuß Bereich angeordneten Feder-/Auftrittselementmit Härte -Dämpfungs- System in einem Führungselement im Mittelfuß Bereich.
Fig. 14 ist eine Seitenansicht einer Schuhzwischensohle mit einem im Vor- und Hinterfuß Bereich angeordneten Feder-/Auftrittselementmit Härte -Dämpfungs- Verstell-System in einem Führungselement im Mittelfuß Bereich und einem Feder-/Auftrittselement ohne eigenes Härte -Dämpfungs- System das am vorderen - und hinteren Feder-/Auftrittelement, den Mittelfußbereich überbrückend, fest aber beweglich angebracht ist.
Fig. 15 ist eine Seitenansicht einer Schuhzwischensohle mit einem im Vor- Mittel und Hinterfuß Bereich angeordneten durchgehenden Feder-/Auftrittselementmit zwei Führungselementen an der Übergangsstelle vom Vor- zum Mittelfuß und vom Mittel - zum Hinterfuß Bereich und einem Härte - Dämpfung -System im Fersenbereich oberhalb der Schuhzwischensohle.
Fig. 16 ist eine Seitenansicht einer Schuhzwischensohle mit einem im Vor- Mittel und Hinterfuß Bereich angeordneten durchgehenden Feder-/Auftrittselementmit zwei Führungselementen an der Übergangsstelle vom Vor- zum Mittelfuß und vom Mittel - zum Hinterfuß Bereich und einem Härte - Dämpfung -System im Fersenbereich oberhalb der Schuhzwischensohle mit zwei Feder-/Auftrittelementen ohne eigenes Härte -Dämpfungs- System die zwischen vorderen - und mittleren sowie mittleren und hinteren Feder-/Auftrittselementfest aber beweglich angebracht sind.
Fig. 17 ist eine Unteransicht eines Härte - Dämpfung - System mit Elastomer Druckfeder und Befestigungslaschen für das Anbringen an eine Schuhzwischensohle.
Fig. 18 eine Seitenansicht im Schnitt von Fig. 17
Fig. 19 ist eine Seitenansicht als Schnitt und Detail einer technischen Lösung für das Einbringen einer taumelnden Schubbewegung in das Härte - Dämpfung - System mit Elastomer Feder
Fig. 20 ist eine Seitenansicht als Schnitt und Detail einer technischen Lösung für das Einbringen einer taumelten Schubbewegung in das Härte - Dämpfung - System mit Elastomer Feder.
Fig. 21 ist eine Seitenansicht als Schnitt und Detail einer technischen Lösung für das Einbringen einer taumelnden Schubbewegung in ein Elastomer Lager, das durch ein Feder-/Auftrittselement ohne Härte - Dämpfung - System das zwischen einem vorderen und einem hinteren Feder-/Auftrittselementfest aber beweglich angebracht ist, entsteht.
Fig. 22 ist eine Seitenansicht als Schnitt und Detail einer technischen Lösung für das Einbringen einer taumelnden Schubbewegung, dass durch ein Feder-/Auftrittselement ohne Härte - Dämpfung - System das zwischen einem vorderen und einem hinteren Feder-/Auftrittselementfest aber beweglich angebracht ist, entsteht.
Fig. 23 ist eine Unteransicht einer Schuhzwischensohle mit einem im Vor Fuß angeordneten Feder-/Auftrittselementmit Elastomer Zugfeder die unterhalb des Feder-/Auftrittelementes verläuft.
Fig. 24 ist eine Seitenansicht von Fig. 23
Fig. 25 ist eine Unteransicht einer Schuhzwischensohle mit einem im Vor Fuß angeordneten Feder-/Auftrittselementmit kompakter Elastomer Feder die fest aber beweglich am Feder-/Auftrittselement und an der Schuhzwischensohle angebracht ist.
Fig. 26 ist eine Seitenansicht als Schnitt und Detail von Fig. 25.
Fig. 27 ist eine Unteransicht einer Schuhzwischensohle mit einem im Vorfuß angeordneten Feder-/Auftrittelement, das Quer zur Mittelachse flügelförmige Ausformungen aufweist und unter den flügelförmigen Ausformungen zylindrische Abstandshalter angeordnet sind.
Fig. 28 ist eine Seitenansicht einer Schuhzwischensohle mit im Vorfußbereich angeordneten Dämpfungsstrukturelement
Fig. 29 ist eine Seitenansicht der Schuhzwischensohle von Fig. 1 mit im Vorfußbereich angeordneten Dämpfungsstrukturelement im ausgelenkten Zustand
Fig. 30 ist eine Unteransicht von Fig. 1 und Fig.2 mit einem Energiespeicher der außerhalb des Stoßabsorbers im Mittelfußbereich angeordnet ist
Fig. 31 ist eine Unteransicht einer Schuhzwischensohle als Ausschnitt mit einem im Vorfußbereich angeordneten Dämpfungsstrukturelement dessen Energiespeicher unterhalb des Stoßabsorbers angeordnet ist
Fig. 32 ist eine Seitenansicht als Detail von Fig. 4
Fig. 33 ist eine Detailansicht eines Energiespeichers mit 2 Druckfedern aus Metall die in der Härte manuell verstellt werden können.
Fig. 34 ist eine Detailansicht des Energiespeichers von Fig. 6 als Hinteransicht
Fig. 35 ist eine Detailansicht als Seitenansicht einer alternativen Anbindung eines Stoßabsorbers und einem Auslenkungsbegrenzungs - Bandes an der Schuhzwischensohle an der Sohlenspitze

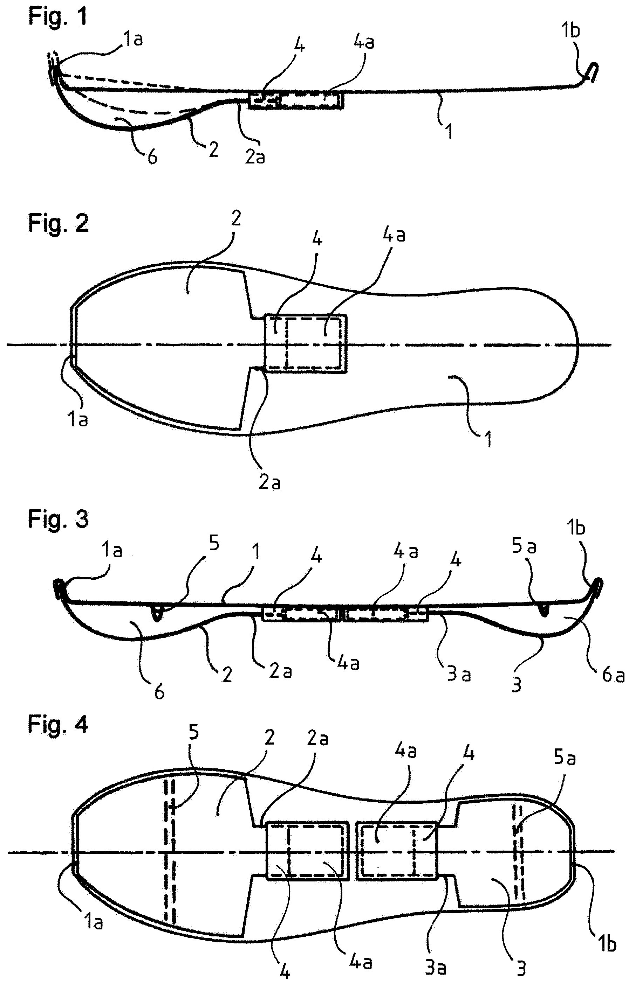

In Fig. 1 und 2 ist eine Schuhzwischensohle ( 1 ), an der ein Feder-/Auftrittselement( 2 ) mit einem Feder-/Dämpfungselement( 4 ) in dem eine Elastomer Druckfeder ( 4a ) angeordnet ist, dargestellt. Bei einer Stoßbelastung auf das Feder-/Auftrittselement ( 2 ) geht ein Teil der Stoßenergie in das Feder-/Dämpfungselement( 4 ) auf die Druckfeder ( 4a ) und ein Teil in die Auslenkung der Schuhzwischensohle ( 1 ) im Vorfußbereich. Das Feder-/Auftrittselement ( 2 ) ist an der Schuhsohlenspitze in eine Aufnahme ( 1a ) die sich oberhalb an der Schuhzwischensohle befindet, gesteckt und fest mit der Sohle verbunden. Diese Verbindungsart erlaubt eine flache Federausbildung des Feder-/Auftrittelementes und dadurch eine direkte Stoßdruckbelastung auf die Druckfeder ( 4a ) im Härte - Dämpfung - Element ( 4 ). Alternativ kann die Befestigung auch in Form eines Scharniers ausgebildet sein. Das Dämpfungsstrukturelement ( 6 ) und die Abstandselemente ( 5, 5a ) sind bei diesen beiden Figuren nicht mit abgebildet.

In Fig. 3 und 4 ist eine Schuhzwischensohle ( 1 ) mit einem im Vorfuß Bereich angeordneten Feder-/Auftrittselement( 2 ) und einem im Hinterfuß Bereich angeordneten Feder-/Auftrittselement( 3 ) mit den dazugehörigen Härte - Dämpfung - Systemen ( 4 ) und einem Dämpfungsstrukturelement ( 6 ) zwischen Schuhzwischensohle ( 1 ) und dem im Vorfuß angeordneten Feder-/Auftrittelement( 2 ) dargestellt. Das Dämpfungsstrukturelement ( 6a ) ist in der Fig. 3 nicht mit abgebildet.

Die Abstandselemente ( 5, 5a ) die an der Schuhzwischensohle ( 1 ) angebracht sind und quer zur Mittelachse der Sohle ( 1 ) unter den Feder-/Auftrittelementen ( 2, 3 ) verlaufen, können konkav oder konvex quer zur Mittelachse der Sohle ( 1 ) ausgeformt und aus mittelharten Elastomeren gebildet sein. Ein konvex ausgeformtes Abstandselement ( 5, 5a ) ermöglicht bei Stoßbelastung auf das Feder-/Auftrittselement( 2, 3 ) eine leichte seitliche Neigung des Schuh mit guter Standfestigkeit. Ein konkav ausgeformtes Abstandselement ( 5, 5a ) erlaubt bei Stoßbelastung auf das Feder-/Auftrittselement( 2, 3 ) keine Neigung des Schuh aber einen sicheren Stand. Das Dämpfungsstrukturelement ( 6, 6a ) hat an den Stellen an denen die Abstandselemente ( 5, 5a ) angebracht sind, durchgehende Öffnungen damit sich das Abstandselement direkt an der Schuhzwischensohle ( 1 ) und dem Feder-/Auftrittselement ( 2, 3 ) abstützen kann. Die Abstandselemente ( 5, 5a ) können auch im Dämpfungsstrukturelement ( 6, 6a ) eingebracht sein. Die Feder-/Auftrittelemente ( 2, 3 ) sind wie in Fig. 1 und 2 an der Schuhzwischensohle befestigt. Das Härte - Dämpfung - Element ist ( 4 ) ist für beide Feder-/Auftrittelemente ( 2, 3 ) baugleich bis auf die Druckfeder ( 4a ), die eine unterschiedliche Shore Härte und Ausformung haben könnte.

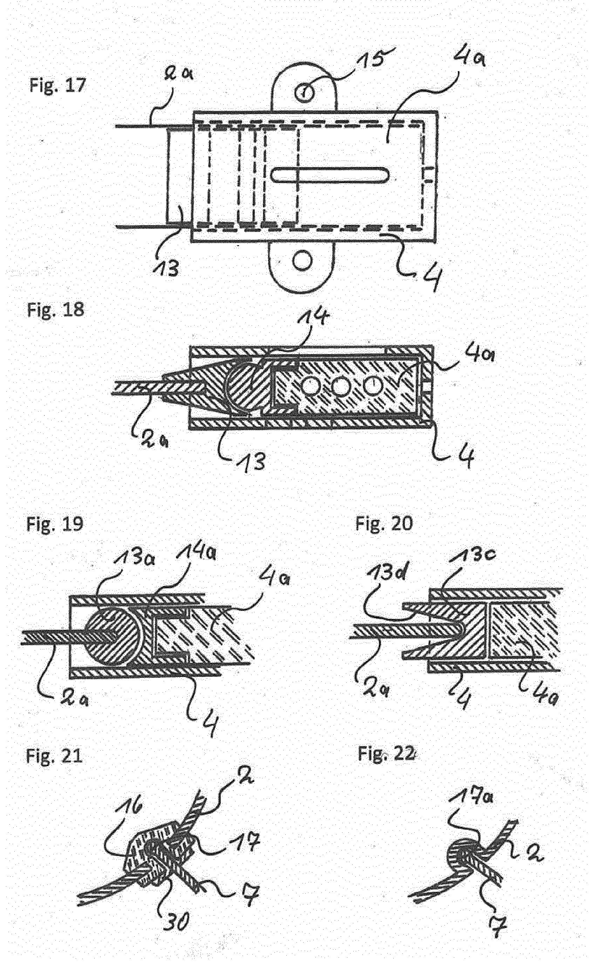

Die Fig. 5 und 6 entspricht im Grundaufbau bis auf das Feder-/Auftrittselement ( 7 ) den Fig. 3 und 4. Das Feder-/Auftrittselement ( 7 ) überbrückt den Mittel Fuß Bereich und ist fest aber beweglich mit den beiden Feder-/Auftrittelementen ( 2, 3 ) verbunden. Die Befestigung kann durch Steckverbindungen wie in Fig. 21 und 22 oder als ein zusammenhängendes Bauteil von Abstandselement ( 7 ) und dem Feder-/Auftrittselement ( 2 ) und ( 3 ) realisiert werden. Es ist gleichfalls vorgesehen, das am Feder-/Auftrittselement ( 7 , 2 und 3) Scharniere angebracht sind. Die Breite, Härte und Ausformung des Feder-/Auftrittselement ( 7 ) wird durch den sportlichen Einsatz und den Laufstil des Läufers bestimmt. Das Dämpfungsstrukturelement ( 6e ) unter dem Feder-/Auftrittselement( 7 ) ist in seiner Größe und seinen Dämpfungseigenschaften frei und in Abhängigkeit zum Feder-/Auftrittselement( 7 ) bestimmbar zu Wählen. Über das Feder-/Auftrittselement ( 7 ) entsteht eine kinetische Energie Koppelung zwischen dem im Vorfuß Bereich angebrachten Feder-/Auftrittselement (2) und dem Feder-/Auftrittselement( 3, 3b ) im Hinterfuß Bereich.

Die Stoßenergie die beim Fersenlauf auf das Feder-/ Aufrittelement (3, 3b ) wirkt, wird vorrangig in das Härte Dämpfung System ( 4 ) in die Druckfeder ( 4a ) eingebracht und mit der gleichen Schubbewegung in das Feder-/Auftrittselement( 7 ), das leicht vorgespannt wird und diese Energie in das Feder-/Auftrittselement( 2 ) einbringt, das sich leicht vorspannt und ein Teil der kinetischen Energie in die Sohlenspitze ( 1a ) der Schuhzwischensohle ( 1 ) transportiert und diese zum Auslenken bringt. Beim Abrollen des Fußes in Laufrichtung über das Federauftritt Element ( 7 ) nimmt der Stoßdruck auf das im Vorfuß angebrachte Feder-/Auftrittselement( 2 ) stark zu. Dadurch wird die federnd ausgelegte Sohle im Vorfuß Bereich noch weiter ausgelenkt. Die zusätzliche kinetische Energie die durch das Abstoßen des Fußes über das im Vor Fuß angebrachte Feder-/Auftrittselement ( 2 ) entsteht, führt zu einer stärkeren Auslenkung der Sohle im Vor Fuß Bereich ( 1a ) der Schuhzwischensohle. Die in der Sohle gespeicherte Federenergie in Verbindung mit Federenergie, die beim Abstoßen des Fußes im Feder-/Auftrittselement ( 2 ) entsteht, wird dem Läufer für eine Beschleunigung der Vorwärtsbewegung zur Verfügung gestellt. Bei einem Vorfuß Läufer wird ein Teil der kinetischen Energie die durch die Stoßbelastung des im Vorfußbereich angeordneten Feder-/AuftrittelementFeder-/Auftrittelements ( 2 ) entsteht im Feder-/Auftrittselement( 7 ) und ( 3, 3b ) gespeichert und als zusätzliche Energie für das Abstoßen des Fußes in Laufrichtung bereit gestellt. Bei einem Mittelfuß Läufer sollte das Feder-/Auftrittselement ( 7 ) an der dem Boden zugewandten Seite höher sein als die Höhe der Feder-/Auftrittselement( 2 ) und ( 3, 3b ). Das Feder-/Auftrittselement ( 7) bekommt beim Aufsetzen des Fußes zuerst Bodenkontakt und kann die vorhandene Aufsetzenergie als erstes speichern und zu gleichen Teilen in das Feder-/Auftrittselement( 2 ) und ( 3, 3b ) einbringen und die gespeicherte kinetische Energie, wie beim Hinter Fuß Läufer beschrieben, dem Läufer für seine Vorwärtsbewegung wieder zur Verfügung stellen. Durch das höher angeordnete Feder-/Auftrittselement (7) wird zusätzlich die Abrollbewegung des Fußes in Laufrichtung verstärkt.

Das Dämpfungsstrukturelement im Bereich des Feder-/Auftrittelementes ( 7 ) wird in seinen Dämpfungseigenschaften und seiner Ausformung, der Wölbung und vorhandenen Federhärte des Feder-/ Auftrittelementes ( 7 ) angepasst. Die Dämpfung - und Härteeigenschaften der Druckfedern ( 4a ) im Härte - Dämpfung System ( 4 ) sind entsprechend der Laufstile anzupassen.

In Fig. 7 ist beispielhaft das Feder-/Auftrittselement ( 3b ) mit einer wellenförmig ausgeformten Feder dargestellt. Mit diesen wellenförmigen Einschnitten können differenzierte druckpunktelastische Verformungen mit geringer Druckfestigkeit in Längsrichtung der Feder-/Auftrittelemente realisiert werden. Wenn die wellenartigen Vertiefungen bis unterhalb der tiefsten Stelle der in Querrichtung zur Sohlenmitte konkav oder konvex geformten Feder-/Auftrittelemente reichen, ist ein Durchbiegen in Längsrichtung der Sohle gegeben. Wenn nur ein wellenförmiger Einschnitt vorliegt entsteht eine begrenzte, scharnierähnliche Auslenkung, die z.B. im Feder-/Auftrittselement ( 7 ) die an seinen Enden, an den Befestigungspunkten zu den Feder-Auftrittselementen ( 2 ) und ( 3, 3b ) liegen. Die Druckfeder ( 4a ) im Härte Dämpfung System ( 4 ) ist bei dieser Auslegung des Feder-/Auftrittselement( 3b ) mit geringerer Shore Härte vorgesehen.

In den Fig. 8, 9, 10 und 11 sind Feder-/Auftrittelemente (24, 25, 26, 27 ) dargestellt, die unterschiedliche Anbindungslösungen ( 1c ,1d, 1e, 1f ) an eine Schuhzwischensohle ( 1 ) zeigen. In Fig. 8 wird das Feder/Auftrittselementunterhalb der Sohle in eine Aufnahme ( 1c ) gesteckt und fest mit der Schuhzwischensohle verbunden. Das Feder-/Auftrittselement ( 1c ) hat durch seine "Zweifachfeder" Ausbildung zwei abgestufte Federkennlinien.

Bei einer Stoßbelastung des Feder-/Auftrittelementes ( 24 ) reagiert die erste Stufe ( 24a ) der Feder mit geringem Federdruck. In der zweiten Stufe wird bei einer zunehmenden Druckbeaufschlagung auf das Feder-/Auftrittselement ( 24 ) die Federkennlinie härter und gibt die entstehende Druckenergie in das Härte Dämpfung System ( 4, 4b, 4c, 4e,4d ) und in die Auslenkung der Schuhzwischensohle ( 1 ) im Vor Fuß Bereich ( 1c ) ab. Mit diesem Feder-/Auftrittselement ( 24 ) kann ein Laufschuh gebildet werden, der neben dem sportlichen Einsatz auch gute Feder- und Dämpfungseigenschaften für ein ruhiges komfortables Laufen mitbringt. Das Feder-/Auftrittselement ( 24 ) kann wie auch die Feder-/Auftrittelemente ( 2, 2b, 2e, 25, 26, 27 ) im Hinter Fuß Bereich eingesetzt werden.

In der Fig. 9 und 10 wird ein Feder-/Auftrittselement ( 25 ) dargestellt, das bogenförmig ausgeformt ist und im unteren Bereich ( 1d ) der Schuhzwischensohle ( 1 ) fest angebracht ist. Dieses Feder-/Auftrittselement ( 25 ) entspricht in seiner bogenförmigen Gestaltung einer klassischen Bogenfeder und kann dadurch effektiv durch unterschiedliche Druck- und Zugfedern ( 4a,18,21 ) im Härte Dämpfung System ( 4, 4b, 4c, 4d ) in seiner Federkennlinie beeinflusst werden. Das Feder-/Auftrittselement ( 26 ) wird unterhalb der Sohle in eine Aufnahme ( 1e ) gesteckt und fest mit der Schuhzwischensohle verbunden.

Das Feder-/Auftrittselement ( 27 ) in Fig. 11 hat einen abgeschwächten bogenförmigen Verlauf und ist daher härter als die Feder-/Auftrittelemente ( 25, 26 ) und wirkt direkter auf die Federn ( 4a, 18, 21 ) im Härte Dämpfung System ( 4, 4b, 4c, 4d ) als die Feder-/Auftrittelemente ( 24, 25, 26 ). Das Feder-/Auftrittselement ( 2, 3 ) ist eine bogenförmige Flachfeder, die bei einer Stoßdruckbelastung direkten Druck auf die Federn ( 4a, 18, 21 ) im Härte -Dämpfung - System und auf die Schuhzwischensohlen Spitze ( 1a ) ausübt.

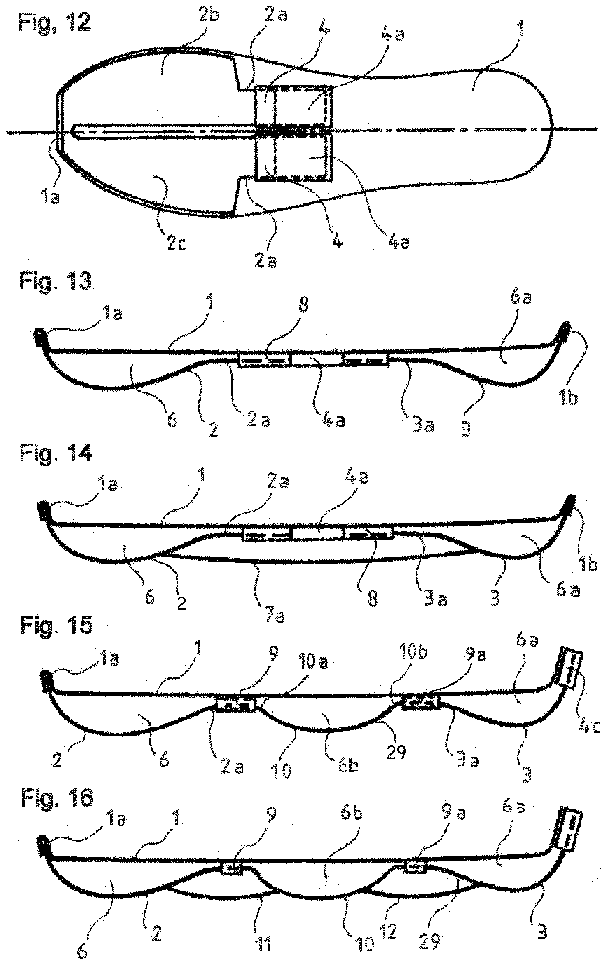

In der Fig. 12 wird ein Feder-/Auftrittselementdargestellt, das aus zwei Feder-/Auftrittelementen ( 2b, 2e ) gebildet wird. Durch diese Zweiteilung kann eine starke Korrektur der Pronation bzw. Überpronation durch in der Härte und Dämpfung unterschiedlich ausgelegter Druck - oder Zugfedern ( 4a, 18, 21 ) im Härte Dämpfung System (4, 4b, 4c, 4d ) erreicht werden. Wird für beide Feder Aufritt Elemente ( 2b, 2e ) nur ein Härte Dämpfung System ( 4, 4b, 4c, 4d ) eingesetzt, kann durch eine unterschiedliche härte Auslegung der Feder-/Auftrittelemente (2b, 2e ) ebenfalls eine Korrektur der Pronation vorgenommen werden.

In der Fig. 13 wird ein Feder-/Dämpfungselement ( 4d ) dargestellt das aus einem Führungselement ( 8 ) in dem sich eine im Führungselement ( 8 ) verschiebbar angeordnete Druckfeder ( 4a ) befindet und die von beiden Seiten durch die Feder-/Auftrittelemente ( 2, 3, 3b ) mit Druck beaufschlagt wird. Durch die gemeinsame Nutzung einer Druckfeder ( 4a ) im Führungselement ( 8 ) dass das Feder-/Dämpfungselement( 4d ) bildet ,wird die anfallende kinetische Energie, die bei einer Stoßbelastung der Feder-/Auftrittelemente ( 2, 3, 3b ) entsteht, je nach Laufstil auch in das Feder-/Auftrittselement( 2 ) oder ( 3, 3b ) verteilt bzw. eingebracht und gleichzeitig wird ein Teil der Energie für das federnde Auslenken der Schuhzwischensohle ( 1 ) im Vor Fuß Bereich ( 1a ) eingesetzt.

Die Fig. 14 entspricht bis auf das zusätzliche Feder-/Auftrittselement ( 7a ) dem technischen Aufbau von Fig. 13. Der Wirkzusammenhang der zwischen dem Feder-/Auftrittselement (2 3, 3b) und dem zusätzlichen Feder-/Auftrittselement( 7a ) besteht ist ähnlich wie in der Fig.5 und 6.

In der Fig. 15 wird eine Schuhzwischensohle ( 1 ) mit drei Feder-/Auftrittelementen ( 2, 10, 3 ) dargestellt, das als zusammenhängendes Federband ( 29 ) mit dem Feder-/Auftrittselement( 3), in ein Härte Dämpfung System ( 4c, 4 ), das im Hinter Fuß Bereich oberhalb der Ferse angeordnet ist, geführt.

Zwei Führungselemente ( 9, 9a ) sind zwischen vorderen ( 2 ) und mittleren ( 10 ) sowie mittleren ( 10 ) und hinteren ( 3 ) Feder-/Auftrittelementen angeordnet, in dem die miteinander verbundenen Feder-/Auftrittelemente ( 2, 10, 3,3b ) verschiebbar verlaufen. Diese Ausführung ist vorteilhaft für Hinter Fuß Läufer, mit einer starken Fersendämpfung

Die Fig. 16 entspricht bis auf die zusätzlichen Feder-/Auftrittelemente ( 11, 12 ) dem technischen Aufbauwie wie er in der Fig. 15 dargestellt ist. Die zusätzlichen Feder-/Auftrittelemente ( 11, 12 ), die zwischen dem Feder-/Auftrittselement( 2 ) und ( 10 ) und zwischen dem Feder-/Auftrittselement( 10) und ( 3 ) angeordnet sind verstärken den kinetischen Wirkzusammenhang zwischen den einzelnen Feder-/Auftrittelementen ( 2, 10, 3 ) und dem Härte Dämpfung System ( 4, 4c ). Alternativ kann ein Härte Dämpfung System ( 4c ) das Zug -und Druckkräfte aufnimmt im Vor Fuß Bereich oberhalb der Schuhzwischensohle an der Sohlenspitze (1a) angebracht werden, um auch für den Vor- und Mittelfußläufer gute Laufbedingen zu ermöglichen. In dem Zusammenhang sollte das Feder-/Auftrittselement (11) zum Boden höher verlaufen als die Feder-/Auftrittelemente ( 2, 10, 12, 3 ). Diese Ausführungsform ist eine vorteilhafte Ausführung für einen alltagstauglichen Laufschuhe sowie für den sportlichen Einsatz für unterschiedliche Hallensportarten.

In Fig. 17 und 18 ist das Feder-/Dämpfungselement ( 4 ) dargestellt in dem das Feder Aufritt Element ( 2, 3, 3b ) mit seinem freien Ende ( 2a,3a ) mit dem Härte - Dämpfung - System ( 4 ) gekoppelt ist.

Ein pyramidenförmig gestalteter Druckkörper ( 13 ) mit konvex, zylindrisch ausgeformtem Druckkörper ( 13a ) ist am Feder-/Auftrittselement( 2, 3, 3b ) an dem freien Ende ( 2a, 3a ) fest aufgesteckt. in Verbindung mit dem konkav ausgeformten Gegenlager ( 14 ) ist eine Schwenkbewegung in einer Achsrichtung möglich. Bei einer Stoßdruck Belastung auf das Feder-/Auftrittselement (2, 3, 3a) wird die auftretende Längenverschiebung und die vorhandene Druckkraft, am freien Ende ( 2a, 3a ) auf die im Feder-/Dämpfungselement( 4 ) eingebrachte Druckfeder ( 4a ) aus Elastomer oder Stahl als Druckkraft abgegeben.

Der pyramidenförmig gestaltete Druckkörper ( 13 ) kann die bei einer Stoßdruckbelastung auftretende Taumelbewegungen am freien Ende ( 2a, 3a ) des Feder-/Auftrittelementes ( 2, 3, 3b ) kompensieren, damit der Druckkörper ( 13 ) im Feder-/Dämpfungselement nicht verklemmt bzw. eingeklemmt wird.

Die Bohrungen ( 15 ) am Feder-/Dämpfungselement( 4 ) die für das Anschrauben des Feder-/Dämpfungselement( 4 ) an die Schuhzwischensohle ( 1 ) vorgesehen sind, können auch als Langlöcher ausgeformt sein, um Korrekturen bei der Montage vornehmen zu können und eine Nachjustierung von Härteeinstellungen zu ermöglichen.

Die Fig. 19 entspricht im Grundprinzip der Fig. 18. In dieser technischen Variante ist der Druckkörper ( 13b ) zylindrisch/ konvex und das Gegenlager ( 14a ) konkav ausgeformt.

In der Fig. 20 ist eine einfache Lösung für die Druckbeaufschlagung einer Druckfeder ( 4a ) im Feder-/Dämpfungselement( 4 ) dargestellt.

Das freie Ende ( 2a, 3a ) am Feder-/Auftrittselement( 2, 3, 3b ) hat keine feste Anbindung mit dem Druckkörper ( 13d ) sondern liegt in einer Mulde ( 13c ) die sich über Schrägen nach außen öffnet um genügend Platz für die taumelnde Stoßbewegung, die das Feder-/Auftrittselement( 2, 3, 3b ) an seinem freien Ende ( 2a, 3a ) in einer Achsausrichtung hat, entsprechenden Raum freizuhalten.

In der Fig. 21 ist eine Befestigungslösung von Feder-/Auftrittelementen ( 7, 7a, 11, 12 ) mit den Feder-/Auftrittelementen ( 2, 3, 3b, 10) dargestellt. An den Feder-/Auftrittelementen ( 7, 7a, 11, 12) sind an ihren freien Enden zwei oder mehrere zylindrische Stifte mit einem größeren kugelig ausgeformten Kopf ( 17 ), die größer als der Durchmesser der zylindrischen Stifte sind, angebracht. Im Abstand von der Kugel ist ein tellerförmiges Auflageelemente ( 30 ) das den Druck der auf die Feder-/Auftrittelemente ( 2, 3, 3b, 10) wirkenden Kräfte abfängt, angeordnet. An den Feder-/Auftrittelementen ( 7, 7a, 11, 12 ) bestehen Bohrungen, in die ein mittelhartes Elastomer Teil ( 16 ) mit seinen ringförmigen Einschnürungen fest eingesetzt sind und in die die zylindrisch ausgeformten Stifte die sich beidseitig an den Feder-/Auftrittelementen ( 7, 7a, 11, 12 ) befinden, mit dem kugelig ausgeformten Kopf ( 17 ) fest aber beweglich eingesetzt werden.

In der Fig. 22 ist die Befestigung der Feder-/Auftrittelementen ( 7, 7a, 11, 12 ) mit den Feder-/Auftrittelementen ( 2, 3, 3b, 10 ) ähnlich wie in der Fig.21 als Schnappverschluss ausgebildet, wobei keine Kugel sondern ein länglich geformtes Bauteil mit zylindrischem Abschluss zum Einsatz kommt. In dem Fall müssen die Feder-/Auftrittelementen (7,7a,11,12 ) aus einem mittelharten flexiblen Material bestehen, damit eine Auslenkbewegung zwischen den hart geformten Feder-/Auftrittelementen ( 2, 3, 3b, 10 ) und den mittelharten Feder-/Auftrittelementen ( 7, 7a, 11, 12 ) gegeben ist.

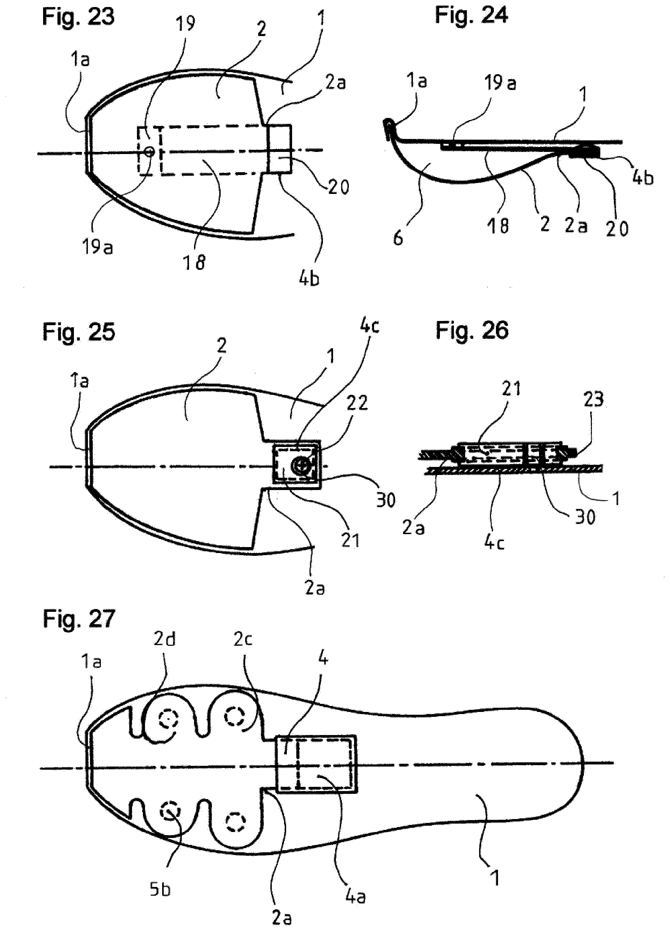

In der Fig. 23 und 24 wird ein Härte Dämpfung System ( 4b ), das eine Schubbewegung der Feder-/Auftrittelemente ( 2, 2b, 2e, 3, 2d, 3, 3b ) in ein Härte Dämpfung System ( 4b ) mit Zugfeder ( 18 ) dargestellt. Diese Ausführungsform ist vorteilhaft für produktionsseitig festgelegte Ausstattungsmerkmale von Laufschuhen die für die unterschiedlichen Laufstile und Einsatzgebiete zur Verfügung gestellt werden. Über eine unterschiedliche Zugfederlänge ( 18 ) unterhalb der Feder-/Auftrittelemente ( 2, 2b, 2e, 3, 2d, 3, 3b ) wird das federnde Auslenken der Schuhzwischensohle ( 1 ) bei einer Stoßdruckbeaufschlagung des Feder-/Auftrittelementes ( 2, 2b, 2e, 3, 2d, 3, 3b ) im Vor Fuß Bereich beeinflusst. Durch eine lange Zugfeder ( 18 ), die bis fast an die Sohlenspitze ( 1a ) reicht, wird das federnde Auslenken der Schuhzwischensohle ( 1 ) im Vor Fuß Bereich abgebremst, da die Zugfeder ( 18 ), wenn sie gespannt wird, gegen das Auslenken der Sohle arbeitet. Bei einer kurzen Zugfeder ( 18 ) , die außerhalb des Vor Fuß Bereiches an dem freien Ende ( 2a, 3a,3b ) angeordnet ist, besteht kein Einfluss der Zugfeder ( 18 ) auf das federnde Auslenken der Sohle im Vor Fuß Bereich sondern es wird nur das Härte - und Dämpfungsverhalten der Feder-/Auftrittelemente (2, 2b, 2e, 3, 2d, 3, 3b ) gesteuert. Die Zugfeder ( 18 ) besteht vorteilhaft aus flachen gummiartigem Elastomer mit unterschiedlicher Shore Härte, Dicke, Breite und Reißfestigkeit für den Einsatz in unterschiedlichen Ausführungen von Laufschuhen. Die Zugfeder ( 18 ) wird an der Schuhzwischensohle ( 1 ) mittels Schraubverbindung ( 19a ) und am Feder-/Auftrittselement ( 2a, 3a ) im Bereich ( 2a, 3a und 20 ) fest und oder lösbar befestigt. Damit ein Auswechseln der Zugfeder ( 18 ) möglich ist, sind in bestimmten Abständen im Feder-/Auftrittselement( 2, 2b, 2e, 3, 2d, 3, 3b ) Bohrungen vorgesehen, die den Zugang zu den Schraubverbindungen ,mit denen die unterschiedlich langen Zugfedern an der Schuhzwischensohle angeschraubt sind, ermöglichen.

Das Härte Dämpfung System ( 4b ) mit der Zugfeder ( 18 ) erlaubt eine kurze Ausführung der Feder-/Auftrittelemente ( 2, 2b, 2e, 3, 2d, 3, 3b ) in Verbindung mit dem Härte Dämpfung System ( 4b ).

In der Fig. 25 und 26 wird ein Feder-/Auftrittselement ( 2 ) mit einem Härte Dämpfung System ( 4c) einer umklammerten ( 23 ) Elastomer Feder ( 21 ) im Bereich ( 2a, 3a ) dargestellt.

In der Elastomer Feder ( 21 ) ist im unteren Drittel der Elastomer Feder ( 21 ) ein Rohrabschnitt ( 30 ) eingelassen bzw. einvulkanisiert, mit dem die Elastomer Feder ( 21 ) mittels Schraube ( 22 ) an der Schuhzwischensohle befestigt wird. Die Elastomer Feder ( 21 ) ist mit ihrer mittigen Vertiefung ( 21a ) in eine ringförmige Aussparung am Feder-/Auftrittselement( 2, 2b, 2e, 3, 2d, 3, 3b ) im Bereich ( 2a, 3a ) eingespannt und ist um den Rohrabschnitt ( 30 ) schwenkbar. Vorteilhaft ist der Einsatz des Härte Dämpfung System ( 4c) in flache Feder-/Auftrittelemente ( 2, 2b, 2e, 3, 2d, 3, 3b ) , da sie eine geringere Taumelbewegung im Bereich ( 2a, 3a ) bei einer Stoßdruckbeaufschlagung haben als höher ausgeformte Feder-/Auftrittelemente.

In der Fig. 27 ist ein Feder-/Auftrittselement ( 2d ) dargestellt, das flügelartig ( 2e ) gestaltet ist und bei dem unter jedem Flügel ( 2e ) Abstandselemente ( 5b ) angeordnet sind.

In allen Figuren und Darstellungen sind unter den Feder-/Auftrittelementen ( 2, 3, 3a, 10 ) Dämpfungsstrukturelement ( 6, 6a, 6b ) eingebracht. Wahlweise können unter den Feder-/Auftrittselement ( 7, 7a, 11, 12 ) Dämpfungsstrukturelement ( 6e, 6c, 6d ) eingebracht sein.

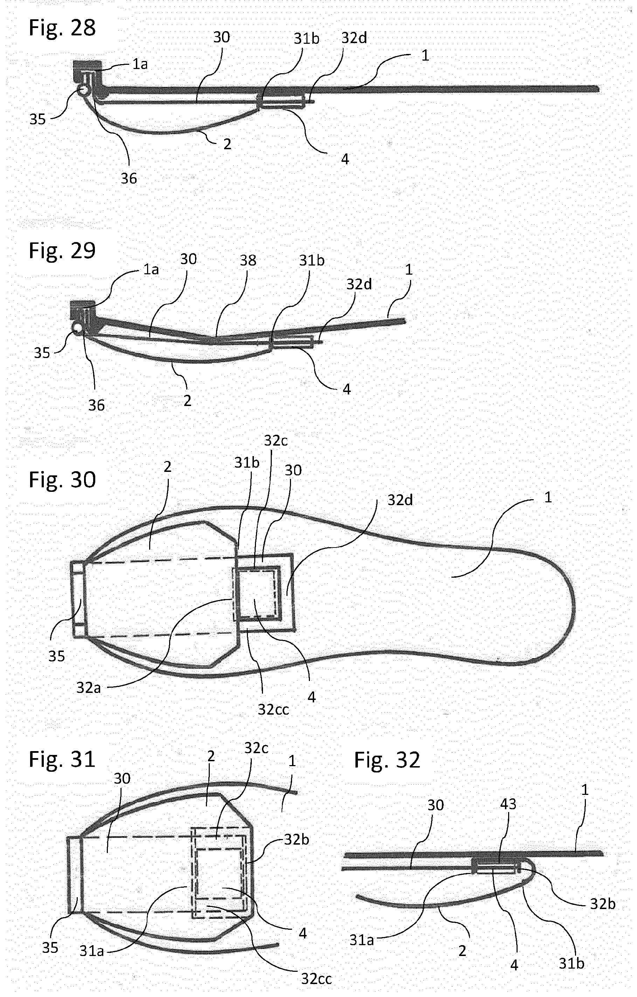

In der Fig.28, Fig.29 und Fig.30 ist eine bevorzugte Ausgestaltung eines Dämpfungsstrukturelementes im Vorfußbereich dargestellt. Das hier als Stoßabsorber 2 bezeichnete Feder-Auftrittselement ist an der Sohlenspitze an einem Schwenkscharnier 35 befestigt, das mit dem Auslenkungsbegrenzungsband 30 gemeinsam in eine an der Sohlenspitze angeordnete Nut 1a gesteckt ist und diese fest mit der Schuhzwischensohle 1 verbunden sind. Damit das Auslenkungsbegrenzungsband 30 in seiner Abstandshöhe im Befestigungsbereich zur Schuhzwischensohle 1 konstant gehalten wird, weist die Schuhzwischensohle 1 in diesem Bereich eine Erhöhung 6 auf. Alternativ kann die Erhöhung 6 die eine Abstands - oder Abstützfunktion hat auch direkt am Auslenkungsbegrenzungsband 30 ausgeformt werden. Das Auslenkungsbegrenzungsband 30 ist ein breites Band, das gegenüber der befestigten Seite 1a, eine Aufnahme für einen Energiespeicher 4 als Feder-/Dämpfungselement aufweist. Der Energiespeicher kann mit Elastomer Druckfedern oder Metallfedern bestückt werden. Werden Elastomer Federn eingesetzt, müssen entsprechend der Ausformung der Federn "Aufnahmekäfige" vorgesehen werden, damit für diese speziell ausgeformten Federn einen optimalen Wirkungsgrad erzielt werden kann. In dieser Ausgestaltungsform des Dämpfungsstrukturelementes wird das Auslenkungsbegrenzungsband 30 nicht in einem mittig angeordneten Schlitz durch die Schubkante 1b geführt, sondern außen an der Schubkante 31b vom Stoßabsorber 2 befinden sich Führungsschlitze, in denen die Rahmen 32c und 32cc vom Energiespeicher 4 schiebbar verlaufen. Die Rahmenkante 32a vom Energiespeicher bildet den Anschlag 32a an dem die Innenkannte der Schubkante 31b anschlägt. Die Druckfedern liegen mit einem Ende an der Außenkante der Schubkante 31b des Stoßabsorbers 2 an und mit ihrer gegenüberliegenden Seite an den Außenrahmen 32d des Auslenkungsbegrenzungsbandes. Die Druckfedern im Energiespeicher 4 können aus Elastomer - oder Stahlfedern gebildet werden. Vorzugsweise sind die Druckfedern aus Stahl, als Wellenfedern mit rundem oder rechteckigem Querschnitt ausgeformt. Fig. 29 zeigt eine Schuhzwischensohle 1 die im Fußballenbereich 38 im Vorderfuß bei einer Stoßbelastung nach oben auslenkt und durch das Auslenkungsbegrenzungsband 30 an einer weitergehenden Auslenkung gehindert wird. Durch den Abstand vom Auslenkungsbegrenzungsband 30 zur Schuhzwischensohle und durch die Shore - Härte bzw. der Federkennlinie der verwendeten Druckfedern wird festgelegt, wieweit die Sohle nach oben auslenkt. Die Schuhzwischensohle 1 ist konstruktiv so ausgelegt, dass sie im Fußballenbereich leichter ausfedert als im Rest der Sohle.

In der Fig.31 und Fig.32 befindet sich der Energiespeicher 4 innerhalb bzw. unterhalb des Stoßabsorbers 2. Die Druckfedern werden von der Aufkantung 31a am Stoßabsorber und der Wandung 32b am Auslenkungsbegrenzungsbandes 30 zusammengepresst. Der Vorteil dieses Dämpfungsstrukturelementes gegenüber der Lösung von Fig. 28 bis 30 ist, dass durch die kurze Bauform, Dämpfungsstrukturelemente auch im Mittel - und Hinterfußbereich bei kleinen Schuhabmessungen problemlos eingesetzt werden können. Das Stoßabsorber 2 ist vor dem Bereich des Energiespeicher 4 beispielhaft bogenförmig 31b ausgeformt. Mit dieser Ausformung des Stoßabsorber 2 und der Verwendung eines zweiten Dämpfungsstrukturelementes im Mittelfußbereich können die spezifischen Anforderungen für den Mittelfußlauf optimal umgesetzt werden.

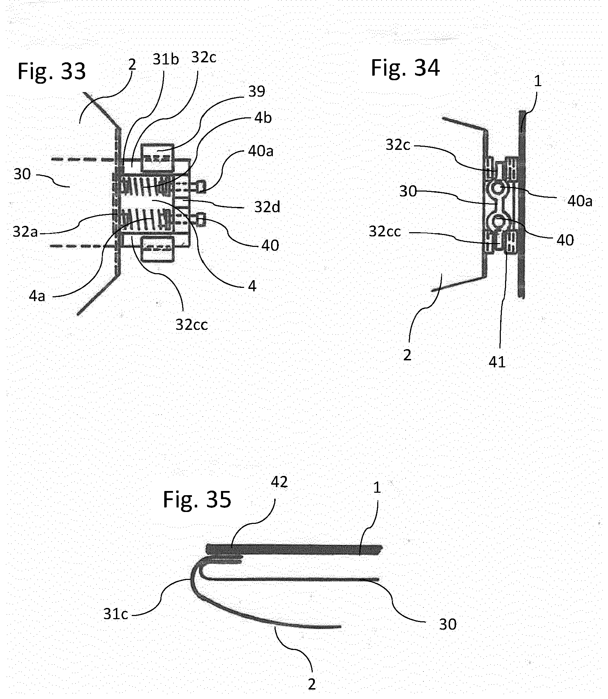

In der Fig.33 und34 wird beispielhaft ein außenliegender Energiespeicher 4 gezeigt, der mit zwei Druckfedern 33a und 33b aus Metall und einer Schraubeinrichtung 40 und 40a, mit der die Durchbiegungshärte des Stoßabsorber 2 variabel eingestellt werden kann.

Das Auslenkungsbegrenzungsband 30 wird mit den beiden Rahmen 32c und 32cc am Energiespeicher 4 in einer Führung 39 geführt die aus gleitfähigem Kunststoff besteht und an der Schuhzwischensohle fest angebracht ist.

Die Führungsschlitze in der Schubkante 31b am Stoßabsorber 2 in denen die Rahmen 32c und 32cc vom Energiespeicher 4 schiebbar verlaufen bestehen aus einem separaten Teil 41 und 41a aus gleitfähigen Kunststoff, dass an der Schubkante 31b fest angebracht ist.

In der Fig. 35 wird ein Stoßabsorber 2 mit einem bogenförmigen Abschnitt 31c im vorderen Bereich und seiner Befestigung unterhalb der Schuhzwischensohle 1 gezeigt.

Mit dieser Ausformung des Stoßabsorbers 2 im vorderen Bereich und der Ausführung wie in Fig. 32 dargestellt wird eine weichere Dämpfung des Schuh realisiert.

Das Auslenkungsbegrenzungsband 30 kann auch alternativ bei dieser Ausformung des Stoßabsorbers 2 direkt mit dem Stoßabsorber 2 im vorderen Bereich 31c fest verbunden werden.

## Patentansprüche

1. Schuhzwischensohle für Laufschuhe mit Feder-/Dämpfungselementen (2, 4, 4a), **dadurch gekennzeichnet, dass** an der Unterseite im Vorfußbereich der Schuhzwischensohle (1) ein bügelförmiges Feder-Auftrittselement (2) angeordnet ist, das mit einem ersten Ende am vorderen Ende der Schuhzwischensohle (1) und mit seinem anderen Ende an einem ersten Feder-/Dämpfungselement (4, 4a) festgelegt ist, dessen Bewegungsrichtung parallel zur Erstreckung der Schuhzwischensohle liegt, so dass es beim Ausfedern eine Schubkraft auf das Feder-Auftrittselement (2) ausübt.

2. Schuhzwischensohle nach Anspruch 1, **dadurch gekennzeichnet, dass** zwischen der Schuhzwischensohle (1) und dem Feder-Auftrittselement (2) ein auf Zug beanspruchtes Auslenkungsbegrenzungsband (30) vorgesehen ist, das mit einem ersten Ende am vorderen Ende der Schuhzwischensohle (1) und mit seinem anderen Ende an einem weiteren oder dem ersten Feder-/Dämpfungselement (4, 4a) festgelegt ist.

3. Schuhzwischensohle nach einem der vorgehergehenden Ansprüche, **dadurch gekennzeichnet, dass** die Schuhzwischensohle (1) aus einer mittelhart ausgeformten Schuhzwischensohle (1), die im Vorfußbereich federnde Eigenschaften aufweist gebildet wird und im Vorfußbereich das federnde Feder-Auftrittselement (2) mit der in Laufrichtung vorderen Seite oberhalb der Schuhsohlenspitze (1a) in eine Aufnahme (1a) gesteckt wird und mit der Schuhzwischensohle fest verbunden ist und dass es mit der gegenüberliegenden druckstabilen Seite (2a) in ein Feder-Dämpfungselement (4) geführt wird in dem sich eine Druckfeder (4a) aus Elastomer - oder Stahl befindet und die Druckfeder ( 4a ) im Feder-Dämpfungselement( 4 ) gegen andere Druckfedern ( 4a ) mit unterschiedlicher Shore - Härte und Ausformungen während der Produktion oder auch vom Nutzer austauschbar ist und das zwischen dem Feder-Auftrittselement (2) und der Schuhzwischensohle ( 1 ) ein Dämpfungsstrukturelement ( 6 ) mit unterschiedlicher Härte und Dämpfung Eigenschaften eingebracht ist und zur Durchbiegungsbegrenzung des Feder-Auftrittselementes ( 2 ) ein oder mehrere konvex, konkav oder zylindrisch ausgeformte Abstandshalter (5, 5b) zwischen dem Feder-Auftrittselement (2) und der Schuhzwischensohle (1) oder am Feder-Auftrittselement (2) angebracht sein können.

4. Schuhzwischensohle nach einem der Ansprüche 1 bis 3, **dadurch gekennzeichnet, dass** die Schuhzwischensohle (1) aus einer mittelhart ausgeformten Schuhzwischensohle (1), die im Vorfußbereich federnde Eigenschaften aufweist, gebildet wird und im Hinterfußbereich ein Feder-Auftrittselement (3) oberhalb der Schuhzwischensohle (1) im Fersenbereich in eine Aufnahme (1b) gesteckt und mit der Schuhzwischensohle fest verbunden ist und dass es mit der gegenüberliegenden druckstabilen Seite (3a) in ein Feder-Dämpfungselement (4) geführt wird in dem sich eine Druckfeder (4a) aus Elastomer - oder Stahl befindet und die Druckfeder ( 4a ) im Feder-Dämpfungselement (4) gegen andere Druckfedern (4a) mit unterschiedlicher Shore - Härte und Ausformungen tauschbar ist und dass zwischen dem Feder-Auftrittselement (3) und der Schuhzwischensohle (1) ein Dämpfungsstrukturelement (6a) mit unterschiedlicher Härte und Dämpfungseigenschaften eingebracht ist und zur Durchbiegungsbegrenzung des Feder-Auftrittselementes (3) ein oder mehrere konvex, konkav oder zylindrisch ausgeformte Abstandshalter (5a, 5b) zwischen dem Feder-Auftrittselement (3) und der Schuhzwischensohle (1) an der Schuhzwischensohle (1) oder am Feder-Auftrittselement (3) angebracht sind und dass das Feder-Auftrittselement (3) mit dem Feder-Auftrittselement ( 2 ) eine gemeinsame Schuhzwischensohle (1) bildet.

5. Schuhzwischensohle nach einem der vorhergehenden Ansprüche, **dadurch gekennzeichnet, dass** die bei einer Stoßdruckbelastung wenigstens des vorderen Feder-Auftrittselements (2) entstehende Längenveränderung des Feder-Auftrittselements (2) in einem Feder-/Dämpfungselement (4b) als Zugspannung für eine Zugfeder (18) genutzt wird, die Zugfeder (18) oberhalb des Feder-Auftrittselement (2) verläuft und im Bereich (2a, 3a) und an der Schuhzwischensohle (1) im Vor Fuß Bereich (19) mittels Schraubverbindung (19a) lös- und wechselbar befestigt ist und aus Elastomer oder Stahl mit unterschiedlichen Federkennlinien und Längen gebildet werden kann und das Feder-Auftrittselement (2) im Bereich (2a, 3a) sich auf der Schuhzwischensohle (1) abstützt.

6. Schuhzwischensohle nach Anspruch 4 und 5, **dadurch gekennzeichnet, dass** die Feder Auftrittselemente (2, 3) im Vor - und Hinterfußbereich in Längsrichtung der Schuhzwischensohle (1) geteilt sind und aus zwei oder mehreren Feder-Auftrittselementen (2b, 2e) gebildet werden, die eigene Feder-Dämpfungselemente (4) haben oder ein gemeinsames Feder-Dämpfungselement (4) nutzen.

7. Schuhzwischensohle nach Anspruch 4 bis 6 **dadurch gekennzeichnet, dass** ein Feder-Auftrittselement (7) ohne eigenes Feder-Dämpfungselement den Mittelfußbereich überbrückt und auf mittlerer Höhe zwischen der Unterseite der Schuh -Zwischensohle (1) und der Bodenkontaktfläche der Feder-Auftrittselemente (2, 3) im Mittelfußbereich mit dem Feder-Auftrittselement (2) und dem Feder-Auftrittselement (3, 3b) fest aber beweglich verbunden ist und dass das Feder-Dämpfungselement (4, 8, 4b, 4c) wahlweise mit dem Feder-Auftrittselement (2) und (3) gekoppelt ist und dass das Feder-Auftrittselement (7) bei sportlichen Laufschuhen höher als die Feder-Auftrittselemente (2, 3, 3b) ist.

8. Schuhzwischensohle nach einem der Ansprüche 4 bis 7 **dadurch gekennzeichnet, dass** ein Feder-Auftrittselement (2) an der Sohlenspitze (1a) und ein Feder Auftrittselement ( 10 ) im Mittelfußbereich und das Feder-Auftrittselement ( 3 ) am hinteren Sohlenende ( 1b ) der Schuhzwischensohle (1) fest oder steck- und oder schwenkbar befestigt ist und die Feder-Auftrittselemente (2, 10, 3) wahlweise einzeln mit einem Feder-Dämpfungselement ( 4, 4c, 4b, 8 ) gekoppelt sind und dass das Feder-Auftrittselement ( 10 ) bei sportlichen Laufschuhen höher als die Feder-Auftrittselemente (2, 3 ) sein kann.

9. Schuhzwischensohle nach einem der Ansprüche 4 bis 8 **dadurch gekennzeichnet, dass** das Feder-Auftrittselement (2) an der Sohlenspitze (1a) und das Feder-Auftrittselement (3) am hinteren Sohlenende (1b) der Schuhzwischensohle (1) steckbar und fest und oder schwenkbar befestigt ist und dass ein Feder-Dämpfungselement (8) im Mittelfußbereich der Schuhzwischensohle (1) fest angebracht ist, die Druckfeder (4a) im Feder-Dämpfungselement (4 ) verschiebbar als loses Teil oder fest mit den Feder-Auftrittselementen ( 2, 3 ) mit ihren freien Enden ( 2a, 3a ) verbunden sind und dass das Feder-Dämpfungselement( 8 ) aus einem Ober - und Unterteil geformt ist und aus gleitfähigem Kunststoff besteht.

10. Schuhzwischensohle nach einem der vorhergehenden Ansprüche, **dadurch gekennzeichnet, dass** ein Feder Auftrittselement (7a ) ohne eigenes Feder-Dämpfungselement den Mittelfußbereich überbrückt und auf mittlerer Höhe zwischen der Unterseite der Schuhzwischensohle ( 1 ) und der Bodenkontaktfläche der Feder-Auftrittselemente ( 2, 3 ) im Mittelfußbereich, mit dem Feder-Auftrittselement ( 2 ) und dem Feder-Auftrittselement ( 3 ) und dem dazugehörigen Feder-Dämpfungselement, ( 8 ) fest aber beweglich verbunden ist und dass das Feder-Auftrittselemente ( 7a ) in Sonderfällen höher als die Feder-Auftrittselemente (2, 3 ) sein kann.

11. Schuhzwischensohle nach einem oder mehreren vorhergehenden Ansprüchen **dadurch gekennzeichnet, dass** drei Feder-Auftrittselemente ( 2, 10, 3 ) miteinander verbunden sind ein durchgehendes Feder-Auftrittselement ( 29 ) bilden und ein Härte - Dämpfung -Systeme ( 4, 4c, 4b ) im Fersen -bereich oberhalb der Schuhzwischensohle ( 1c ) das durchgehende Feder-Auftrittselement ( 29 ) aufnimmt und im Vorfußbereich an der Sohlenspitze ( 1a ) das Feder-Auftrittselement ( 2 ) steck-, fest oder schwenkbar angebracht ist und das die zwei Führungselemente ( 9, 9a ) an der Übergangsstelle vom Vor- zum Mittelfuß -bereich und vom Mittel - zum Hinterfußbereich fest an der Schuhzwischensohle ( 1 ) befestigt sind und aus einem Ober - und Unterteil geformt sind und aus gleitfähigem Kunststoff bestehen.

12. Schuhzwischensohle nach Anspruch 11, **dadurch gekennzeichnet, dass** das im Vorfußbereich angeordnete Feder-Auftrittselement ( 2 ) mit dem mittleren Feder-Auftrittselement ( 10 ) durch einem Feder-Auftrittselement ( 11 ) und das mittlere Feder-Auftrittselement ( 10 ) mit dem hinteren Feder-Auftrittselement ( 3 ) durch ein Feder-Auftrittselement ( 12 ) auf mittlerer Höhe zwischen der Unterseite der Schuhzwischensohle ( 1 ) und der Bodenkontaktfläche der Feder-Auftrittselemente ( 2, 11, 10, 12, 3 ) fest aber beweglich miteinander verbunden sind und das die Feder-Auftrittselemente ( 11 und 10 ) in Sonderfällen höher als die Feder-Auftrittselemente ( 2, 12, 3 ) sein können.

13. Schuhzwischensohle nach einem oder mehreren vorhergehenden Ansprüchen **dadurch gekennzeichnet, dass** das Feder-Auftrittselement (2, 2d, 2e, 2b, 3, 3b, 7, 7a, 10, 11, 12, 24, 25, 26, 27 ) quer zur Mittelachse oder bis zu 10 Grad Abweichung eine oder mehrere rinnenförmige Vertiefungen ( 3b/R ) aufweist und das die Feder Auftrittselement ( 2, 2d, 2e, 2b, 3, 3a, 7, 7a, 10, 11, 12, 24, 25, 26, 27 ) in Längs - sowie Querrichtung einen unterschiedlichen Höhen-, Krümmung- oder Bogenverlauf haben, konkav, konvex oder mit freien Kurvenverlauf gestaltet sind und die rinnenförmigen Vertiefungen ( 3b/R ) bis unter die tiefsten Stellen der Oberflächenverformung reichen, damit sich das Feder Auftrittselement trotz seiner Oberflächenverformung in Längsrichtung der Schuhzwischensohle ( 1 ) durchbiegen lässt.

14. Schuhzwischensohle nach einem oder mehreren der Ansprüche 3 bis 13 **dadurch gekennzeichnet, dass** die Feder-Auftrittselemente (2, 2a, 2b, 3,b 10,7a, 7, 24, 25, 26, 27 ) oder die Schuhzwischensohle ( 1 ) auf der einem Dämpfungsstrukturelement (6, 6a, 6b, 6e, 6c, 6d ) zugewandten Seite, ein oder mehrere Abstandselemente ( 5, 5a, 5b ) die konkav oder konvex, streifenförmig quer zur Mittelachse verlaufend oder zylindrisch ausgeformt sind und durch Öffnungen in den Dämpfungsstrukturelementen ( 6, 6a, 6e, 6b, 6c, 6d ) bei Stoßbeaufschlagung die Schuhzwischensohle ( 1 ) und das Feder-Auftrittselement (2 , 2a, 2b, 3,b 10, 7a, 7, 24, 25, 26, 27 ) sich mittels der Abstandselemente berühren und das die Resthöhe bis auf ca. 35% der bestehenden Gesamthöhe zwischen Schuhzwischen -sohle ( 1 ) und der Feder-Auftrittselemente begrenzt wird, wobei
im Dämpfungsstrukturelement ( 6, 6a, 6e, 6b, 6c, 6d ) streifenförmig quer zur Mittelachse angeordnet oder zylindrisch ausgeformte Abstands -elemente ( 5, 5a, 5b ) eingelagert sind, die bei Stoßbeaufschlagung ein Komprimieren der Dämpfungsstrukturelemente (6, 6a, 6e, 6b, 6c, 6d ) verhindern und den Abstand zwischen Schuhsohle und Feder Auftrittselement bis zu einer Abstandshöhe von ca. 35% der Gesamthöhe zulassen und das die Abstandshalter aus Elastomeren mit einer Shore-Härte zwischen 60 und 90 gebildet werden, und wobei die Dämpfungsstrukturelemente ( 6, 6a, 6e, 6b, 6c, 6d ) aus PU Schäumen mit unterschiedlicher Shore - Härte und Viskoelastizität gebildet werden oder im 3-D Druck aus TPU oder Silikon mit unterschiedlicher Shore- Härte und viskoelastischen Eigenschaften mit offenporigen und oder räumlichen Strukturen, die vorteilhaft als zusammenhängende sechseckig geformte Wellenfedern gebildet sind, hergestellt werden und das die Körper mit einer Außenhaut bis auf eine Lufteinlass - und Auslass-Membran geschlossen sind und dass der technisch - konstruktive Aufbau so ausgelegt ist, das eine Verschiebung in tangentialer und senkrechter Richtung möglich ist aber eine Quer - verschiebung zur Sohlenmittelachse weitgehendste verhindert wird.

15. Schuhzwischensohle nach einem oder mehreren vorhergehenden Ansprüchen **dadurch gekennzeichnet, dass** die Feder Auftrittselemente ( 2, 2a, 2b, 3,b 10, 7a, 7, 24, 25, 26, 27 ) aus carbonfaserverstärktem Kunststoff gebildet werden und ihre unterschiedliche Verwendung in Laufschuhen mit den unterschiedlich geforderten Federhärten, in Abhängigkeit der verwendeten Dämpfungsstrukturelemente ( 6, 6a, 6e, 6b, 6c, 6d ) festgelegt wird und das einzelne Feder-Auftrittselemente ( 2, 2a, 2b, 3,b 10, 7a, 7, 24, 25, 26, 27) wenn die Dämpfung und Härteeigenschaften in den Dämpfungsstrukturelementen ( 6, 6a, 6e, 6b, 6c, 6d ) mit den Feder-Auftrittselementen aufeinander abgestimmt sind, wahlweise aus mittelhartem TPEE basierten Kunststoff gebildet sind und dass das durchgehende Feder-Auftrittselement (29 ), das aus dem Feder-Auftrittselement (2 und 10 und 3 ) gebildet wird und das durchgehende Feder-Auftrittselement, das aus dem Feder-Auftrittselement ( 2 , 11, 10, 12 und 3 ) gebildet wird, in einem Fertigungsprozess zusammenhängend hergestellt worden sind.

16. Schuhzwischensohle nach einem oder mehreren vorhergehenden Ansprüchen **dadurch gekennzeichnet, dass** die Feder-Auftrittselemente ( 2, 2a, 2b, 3,b 10, 7a, 7, 24, 25, 26, 27 ) entsprechend ihrer Verwendung in unterschiedlichen Sport - und Laufschuhen eine Höhe zwischen 20mm und 40mm haben, die Höhe von einzelnen an der Schuhzwischensohle ( 1 ) befindlichen Feder-Auftrittselementen zu anderen an der Schuhzwischensohle ( 1 ) angebrachten Feder-Auftrittselementen in ihrer Höhe und Härte unterschiedlich gewählt ist, die Feder-Auftrittselemente ( 2, 2d, 2b, 2e, 3, 3b, 10, 24, 25, 26 27 ) an ihrer Befestigungsseite an der Schuhzwischensohle ( 1 ) unterschiedliche Befestigungsarten ( 1a, 1b, 1c, 1d,1e, 1f) entsprechend dem Verwendungszweck haben und die Feder-Auftrittselemente ( 2, 2d, 2b, 2e, 3, 3b, 10, 24, 25, 26 27 ) konstruktiv in ihren Federkennlinien und ihrer Bauhöhe und Federausformung unterschiedlich für festgelegte Laufstile und Einsatzorte ausgebildet sind..

17. Schuhzwischensohle nach einem der Ansprüche 2 bis 16, **dadurch gekennzeichnet, dass** die Schuhzwischensohle (1) im Ballenbereich ( 38 ) des Vorfußes federnd ausgelenkbar ist und ein Feder-Auftrittselement (2) mit einer Seite schwenkbar gelagert ist und mittels eines Scharniers ( 35 ) in eine Aufnahme (1a ) an der Schuhzwischensohlenspitze der Schuhzwischensohle ( 1 ) fest eingebracht ist und das Feder-Auftrittselement ( 2 ) sich mit seiner gegenüberliegenden Seite auf der Schuhzwischensohle ( 1 ) oder dem Auslenkungsbegrenzungsband( 30 ) abstützt und dass das Auslenkungsbegrenzungsband(30) oberhalb des Feder-Auftrittselement ( 2 ) verläuft, mit einer Seite in die Aufnahme ( 1a) fest eingebracht ist und mit der gegenüberliegenden Seite in Öffnungen durch die Schubkante ( 31b ) am Feder-Auftrittselement ( 2 ) verläuft und oder in seitlichen Führungen an der Schubkante ( 31b ) am Feder-Auftrittselement ( 2 ) in denen die Rahmen (32c, 32cc) geführt werden und das im Auslenkungsbegrenzungsband (30) hinter der Schubkante ( 31b ) am Feder-Auftrittselement (2 ) sich ein als Energiespeicher wirkendes Feder-/Dämpfungselement (4) mit mindestens einer Druckfeder (4a) aus Metall oder aus Elastomer befindet und die auftretende lineare Schubbelastung der Schubkante ( 31b ) , die durch eine Stoßbelastung des Feder-Auftrittselement ( 2) und der damit verbundenen Kompression entsteht, abfedert, dämpft und in Form von Energie speichert.

18. Schuhzwischensohle nach Anspruch 17, **dadurch gekennzeichnet, dass** das Auslenkungsbegrenzungsband (30) das mit dem Feder-Auftrittselement (2) über den Energiespeicher (4) gekoppelt ist, das über den gewählten Höhenabstand zur Schuhzwischensohle (1), den Auslenkungsgrad der Sohle in Abhängigkeit der verwendeten Federkennlinien bzw. Shore-Härte der Druckfedern im Energiespeicher (4) bestimmt wird, und dass das Auslenkungsbegrenzungsband (30) aus unterschiedlichen Materialien wie gewebten Bändern oder aus federnden Carbon mit unterschiedlichen Flex Graden, als breites Band mit Rechteckquerschnitt oder einzelnen Zugseilen mit rundem oder rechteckigem Querschnitt mit angepressten oder angespritzten Elementen für die Befestigung an der Schuhzwischensohle (1) sowie für die Aufnahme der Druckfeder aus Metall oder Elastomer im Energiespeicher (4) besteht.

19. Schuhzwischensohle nach einem oder mehreren der vorhergehenden Ansprüchen **dadurch gekennzeichnet, dass** das Feder-Auftrittselement ( 2) entsprechend der Einsatzart und der verschiedenen Laufstile unterschiedlich ist, in Quer- sowie Längsrichtung unterschiedliche Federausformungen mit unterschiedlichen Federkennlinien bzw. Shore - Härte besitzet und weiterhin unterschiedliche Krümmungen- oder Bogenverläufe in Verbindung mit unterschiedlichen Höhen der einzelnen Feder-Auftrittselement (2) von ca. 15mm bis maximal 40 mm besitzet und aus Materialien wie Carbon oder mittelharten Kunststoffen mit unterschiedlichen Flex - Graden gebildet wird und die Anbindung an der Schuhzwischensohle (1 ) an der Sohlenspitze, im Mittelfußbereich oder am hinteren Schuhzwischensohlen Ende im Fersenbereich schwenkbar mittels Scharnier ( 35 ) oder fest (42) durch Kleben , Schweißen, oder Steckverbindungen erfolgt.

## Claims

1. Shoe midsole for running shoes with spring/damping elements (2, 4, 4a), **characterized in that** a bow-shaped spring/tread element (2) is arranged on the underside in the forefoot region of the shoe midsole (1), wherein the spring/tread element is fixed by a first end to the front end of the shoe midsole (1) and by its other end to a first spring/damping element (4, 4a), the direction of movement of which is parallel to the extension of the shoe midsole, so that it exerts a thrust force on the spring/tread element (2) when it flexes out.

2. Shoe midsole according to claim 1, **characterized in that** between the shoe midsole (1) and the spring/tread element (2) there is provided a deflection limiting band (30) subjected to tensile stress, which is fixed with a first end to the front end of the shoe midsole (1) and with its other end to a further or the first spring/damping element (4, 4a), wherein the spring/tread element (2) and the deflection limiting band (30) is fixed at opposite ends of the spring/damping element (4, 4a) which is subjected to compression.

3. Shoe midsole according any one of the preceding claims, **characterized in that** the shoe midsole (1) is formed from a semi-hard shoe midsole (1), which has resilient properties in the forefoot region, and in the forefoot region the resilient spring/tread element (2) is inserted with the front side in the walking direction above the toe (1a) of the shoe sole into a receptacle (1a) and is firmly connected to the shoe midsole, and **in that** it is guided with the opposite, pressure-stable side (2a) into a spring damping element (4) in which a compression spring (4a) made of elastomer or steel is located and the compression spring (4a) in the spring damping element (4) can be replaced by other compression springs (4a) with different Shore hardnesses and shapes during production or by the user, and in which a damping structure element (6) with different hardnesses and damping properties is inserted between the spring/tread element (2) and the shoe midsole (1) in order to limit the deflection of the spring/tread element (2), concave or cylindrically shaped spacers (5, 5b) can be fitted between the spring/tread element (2) and the shoe midsole (1) or on the spring/tread element (2).

4. Shoe midsole according to claim 1, **characterized in that** the shoe midsole (1) is formed from a semi-hard shoe midsole (1), which has resilient properties in the forefoot region, and a spring/tread element (3) is inserted into a receptacle (1b) above the shoe midsole (1) in the backfoot region in the rear foot region and is firmly connected to the shoe midsole, and the opposite, pressure-stable side (3a) of the spring/tread element (3) is guided into a spring damping element (4) in which a compression spring (4a) made of elastomer - or steel - is located, and the compression spring (4a) in the spring damping element (4) is interchangeable with other compression springs (4a) with different Shore hardness and shapes, and that a damping structure element (6a) with different hardness and damping properties is inserted between the spring/tread element (3) and the shoe midsole (1), and one or more convex, concave or cylindrically shaped spacers (5a, 5b) for deflection limitation of the spring/tread element (3) are provided between the spring/tread element (3) and the shoe midsole (1), or cylindrically shaped spacers (5a, 5b) are fitted between the spring/tread element (3) and the shoe midsole (1) on the shoe midsole (1) or on the spring/tread element (3), and that the spring/tread element (3) forms a common shoe midsole (1) with the spring/tread element (2).

5. Shoe midsole according to claim 1, **characterized in that** the change in length of at least the one or more spring/tread element (2) occurring during impact pressure loading of the spring/tread elements (2) is used in a spring/damping element (4b) as tensile stress for a tension spring (18), the tension spring (18) runs above the spring/tread element (2) and is detachably and exchangeably fastened in the region (2a, 3a) and to the shoe midsole (1) in the forefoot region (19) by means of a screw connection (19a) and is detachably and exchangeably fastened in the region (2a, 3a) and to the shoe midsole (1) in the forefoot region (19) by means of a screw connection (19a) and can be formed from elastomer or steel with different spring characteristics and lengths, and the spring/tread element (2) in the region (2a, 3a) is supported on the shoe midsole (1).

6. Shoe midsole according to any one of the claims 4 and 5, **characterized in that** the spring/tread elements (2, 3) are divided in the forefoot and rearfoot regions in the longitudinal direction of the shoe midsole (1) and are formed from two or more spring/tread elements (2b, 2e) which have their own spring damping elements (4) or use a common spring damping element (4).

7. Shoe midsole according to any one of the claims 4 to 6, **characterized in that** a spring/tread element (7) having no spring damping element of its own bridges the midfoot region and is firmly but movably connected to the spring/tread element (2) and to the spring/tread element (3b) in the midfoot region at a medium height between the underside of the shoe midsole (1) and the ground contact surface of the spring/tread elements (2, 3) in the midfoot region, and **in that** the spring damping element (4, 8, 4b, 4c) is optionally coupled to the spring/tread element (2) and (3), and **in that** the spring/tread element (7) can be higher than the spring/tread elements (2, 3, 3b) in athletic running shoes.

8. Shoe midsole according to any one of the claims 4 to 7, **characterized in that** a spring/tread element (2) is fixedly or pluggably and/or pivotably fastened to the sole tip (1a) and a spring/tread element (10) is fastened to the midfoot region and the spring/tread element (3) is fastened to the rear sole end (1b) of the shoe midsole (1), and the spring/tread elements (2, 10, 3) are optionally individually coupled to a spring damping element (4, 4c, 4b, 8), and **in that** the spring/tread element (10) is higher than the spring damping element (4, 4c, 4b, 8) in the case of athletic running shoes, 10, 3) are optionally individually coupled to a spring/tread element (4, 4c, 4b, 8), and **in that** the spring/tread element (10) can be higher than the spring/tread elements (2, 3) in athletic running shoes.

9. Shoe midsole according to any one of the claims 4 to 8, **characterized in that** a spring/tread element (2) is plugged in at the sole tip (1a) and a spring/tread element (3) is plugged in at the rear sole end (1b) of the shoe midsole (1) and is fixedly and/or pivotably fastened, and **in that** a spring-damping element (8) is fixedly mounted in the midfoot region of the shoe midsole (1), the compression spring (4a) in the spring/tread element (4) is displaceably connected as a loose part or fixedly connected to the spring/tread elements (2, 3) with their free ends (2a, 3a), and **in that** the spring/tread element (8) is formed from an upper and lower part and consists of slidable plastic.

10. Shoe midsole according to any one of the preceding claims, **characterized in that** a spring/tread element (7a) is bridging the midfoot region without its own spring-damping element and is connected at mid-height between the underside of the shoe midsole (1) and the ground contact surface of the spring/tread elements (2, 3) in the metatarsal region, with the spring/tread element (2) and the spring/tread element (3) and the associated spring-damping element (8), and wherein the spring/tread element (7a) can be higher than the spring/tread elements (2, 3) in special cases.

11. Shoe midsole according to any one of the preceding claims, **characterized in that** three spring/tread elements (2, 10, 3) are connected to one another to form a continuous spring/tread element (29), and a hardness-damping system (4, 4c, 4b) receives the continuous spring/tread element (29) in the backfoot region above the shoe midsole (1c) , and the spring/tread element (2) is attached in a plug-in or pivotable manner to the shoe midsole (1c) in the forefoot region at the toe of the sole (1a), and that the two guide elements (9, 9a) are firmly attached to the shoe midsole (1) at the transition point from the forefoot to the midfoot region and from the midfoot to the rearfoot region and that the guide elements (9, 9a) are formed from an upper and lower part and consist of low-friction plastic.

12. Shoe midsole according to claim 11, **characterized in that** the spring/tread element (2) arranged in the forefoot region is connected to the middle spring/tread element (10) by a spring/tread element (11) and the middle spring/tread element (10) is connected to the rear spring/tread element (3) by a spring/tread element (12) at the middle height between the underside of the shoe midsole (1) and the ground contact surface of the spring/tread elements (2, 10, 12, 3) and that the spring/tread elements (11 and 10) can be higher than the spring/tread elements (2, 12, 3) in special cases.

13. Shoe midsole according to any one of the preceding claims, **characterized in that** the spring/tread element (2, 2d, 2e, 2b, 3, 3b, 7, 7a, 10, 11, 12, 24, 25, 26, 27) has one or more channel-shaped depressions (3b/R) transverse to the central axis or deviated by up to 10 degrees, and **in that** the spring/tread elements (2, 2d, 2e, 2b, 3, 3a, 7, 7a, 10, 11, 12, 24, 25, 26, 27) have a different vertical, curvilinear or arcuate shape in the longitudinal and transverse directions, are concave, convex or have a free curvilinear shape, and the channel-shaped depressions (3b/R) extend to below the deepest points of the surface deformation, so that the spring/tread element can be bent in the longitudinal direction of the shoe midsole (1) despite its surface deformation.

14. Shoe midsole according to any one or more of claims 3 to 13, **characterized in that** the spring/tread elements (2, 2a, 2b, 3, b 10, 7a, 7, 24, 25, 26, 27) or the shoe midsole (1), have, on the side facing a damping structural element (6, 6a, 6b, 6e, 6c, 6d), one or more spacer elements (5, 5a, 5b) which are concave or convex, or cylindrically shaped extending transversely to the central axis in the form of strips or are cylindrically shaped and the shoe midsole (1) and the spring/tread element (2, 2a, 2b, 3, b 10, 7a, 7, 24, 25, 26, 27) contact each other by means of the spacer elements through openings in the damping structural elements (6, 6a, 6e, 6b, 6c, 6d) upon impact and that the residual height is limited to approx. 35% of the existing total height between the intermediate shoe sole (1) and the spring/tread elements, wherein spacer elements (5, 5a, 5b, 5c, 6d) which are arranged in strips transversely with respect to the central axis or are cylindrically shaped, are embedded in the damping structural element (6, 6a, 6e, 6b, 6c, 6d), 5a, 5b) which, when subjected to impact, prevent compression of the damping structure elements (6, 6a, 6e, 6b, 6c, 6d) and allow the distance between the shoe sole and the spring/tread element up to a distance of approx. 35% of the total height, and **in that** the spacers are formed from elastomers having a Shore hardness of between 60 and 90, wherein the damping structural elements (6, 6a, 6e, 6b, 6c, 6d) are formed from PU foams with different Shore hardness and viscoelasticity or are formed in 3D printing from TPU or silicone with different Shore hardness and viscoelastic properties with open-pore and/or spatial structures, which are advantageously formed as coherent hexagonally shaped wave springs, and that the bodies are closed with an outer skin except for an air inlet and outlet membrane and that the technical-constructive design is such that a displacement in tangential and vertical direction is possible but a transverse displacement to the sole center axis is largely prevented.

15. Shoe midsole according to any one or more of the preceding claims, **characterized in that** the spring/tread elements (2, 2a, 2b, 3,b 10, 7a, 7, 24, 25, 26, 27) are formed from carbon-fiber-reinforced plastic, and their different use in running shoes with the differently required spring stiffnesses is determined in dependence on the damping structural elements (6, 6a, 6e, 6b, 6c, 6d) used, and when the damping and hardness properties of the individual spring/tread elements (2, 2a, 2b, 3, b 10, 7a, 7, 24, 25, 26, 27) are matched to the spring/tread elements, the individual spring/tread elements are optionally formed from medium-hard TPEE-based plastic, and, **in that** the continuous spring/tread element (29) formed from the spring/tread element (2, 10, 3) and the continuous spring/tread element formed from the spring/tread element (2 , 11, 10, 12, 3) are manufactured continuously in a manufacturing process.

16. Shoe midsole according to any one or more of the preceding claims, **characterized in that** the spring/tread elements (2, 2a, 2b, 3, b 10, 7a, 7, 24, 25, 26, 27) have a height of between 20mm and 40mm in accordance with their use in different sports and running shoes, and that the height of individual spring/tread elements located on the shoe midsole (1)differ in height and hardness from other spring/tread elements attached to the shoe midsole (1), and **in that** the spring/tread elements (2, 2d, 2b, 2e, 3, 3b, 10, 24, 25, 26, 27) have different types of fastening (1a, 1b, 1c, 1d, 1e, 1f) on their fastening side to the shoe midsole (1) in accordance with the intended use, and the spring/tread elements (2, 2d, 2b, 2e, 3, 3b, 10, 24, 25, 26 27) are structurally different in their spring characteristics and their construction height and spring shaping and are used for defined walking styles and places of use.

17. Shoe midsole according to any one of the preceding claims 2 to 16, **characterized in that** the shoe midsole (1) can be deflected resiliently in the ball region (38) of the forefoot, and a spring/tread element (2) is mounted pivotably with one side and is inserted fixedly by means of a hinge (35) into a receptacle (1a) at the shoe midsole tip (14) of the shoe midsole (1), and the spring/tread element (2) rests with its opposite side on the shoe midsole (1) or the deflection-limiting band (30) and the spring/tread element (2) rests with its opposite side on the shoe midsole (4) or on the deflection-limiting band (30), that the deflection limiting band (30) extending above the spring/tread element (2) is firmly inserted with one side into the receptacle (1a) and with the opposite side runs in openings through the thrust edge (31b) on the spring/tread element (2) and or in lateral guides on the thrust edge (31b) on the spring/tread element (2) in which the frames (32c, 32cc) are guided and that in the deflection limiting band (30) behind the thrust edge (31b) on the spring/tread element (2) there is a spring/damping element (4) acting as an energy store with at least one compression spring (4a) made of metal or elastomer and cushions, damps and stores in the form of energy the occurring linear thrust load of the thrust edge (31b) which is produced by an impact load of the spring/tread element (2) and the associated compression.

18. Shoe midsole according to claim 17, **characterized in that** the deflection-limiting band (30), which is coupled to the spring/tread element (2) via the energy accumulator (4), is determined via the selected height distance from the shoe midsole (1), the degree of deflection of the sole as a function of the spring characteristic curves or Shore hardness of the compression springs in the energy store (4), and **in that** the deflection limiting band (30) is composed of different materials, such as woven bands or of resilient carbon with different flex degrees, as a wide band with rectangular cross section or individual traction cables with round or rectangular cross section with pressed-on or injection-molded elements for fastening to the shoe midsole (1) and for receiving the compression spring made of metal or elastomer in the energy store (4).

19. Shoe midsole according to any one or more of the preceding claims, **characterized in that** the spring/tread element (2) is shaped differently according to the type of use and the different running styles, can have different spring shapes with different spring characteristics or Shore hardness in the transverse and longitudinal directions, and have different curvatures or curved shapes in conjunction with different heights of the individual spring/tread elements (2) of approx. 15 mm to a maximum of 40 mm, and is formed from materials such as carbon or medium-hard plastics with different degrees of flex, and the connection to the shoe midsole (1) at the sole tip, in the midfoot region or at the rear shoe midsole end in the backfoot region are made pivotably by means of a hinge (35) or firmly (42) by bonding, welding or plug-in connections.

## Revendications

1. Semelle intermédiaire de chaussure pour chaussures de course avec éléments élastiques/amortisseurs (2, 4, 4a), **caractérisée en ce qu'**un élément de marche élastique (2) en forme d'étrier est disposé sur le côté inférieur dans la zone de l'avant-pied de la semelle intermédiaire de chaussure (1), élément qui est fixé avec une première extrémité à l'extrémité avant de la semelle intermédiaire de chaussure (1) et avec son autre extrémité à un premier élément élastique/amortisseur (4, 4a), dont la direction de mouvement est parallèle à l'extension de la semelle intermédiaire de chaussure, de sorte qu'il exerce une force de poussée sur l'élément de marche élastique (2) lors de la détente.

2. Semelle intermédiaire de chaussure selon la revendication 1, **caractérisée en ce qu'**entre la semelle intermédiaire de chaussure (1) et l'élément de marche élastique (2), une bande de limitation de déviation (30) sollicitée en traction, qui est fixée avec une première extrémité à l'extrémité avant de la semelle intermédiaire de chaussure (1) et avec son autre extrémité à un autre ou au premier élément élastique/amortisseur (4, 4a) est prévue.

3. Semelle intermédiaire de chaussure selon l'une quelconque des revendications précédentes, **caractérisée en ce que** la semelle intermédiaire de chaussure (1) est formée d'une semelle intermédiaire de chaussure moulée de dureté moyenne (1) qui présente des propriétés élastiques dans la zone de l'avant-pied et, dans la zone de l'avant-pied, l'élément de marche élastique (2) avec le côté avant dans la direction de mouvement est inséré dans un logement (1a) au-dessus de la pointe de semelle de chaussure (1a) et est fermement connecté à la semelle intermédiaire de chaussure et **en ce qu'**il est guidé avec le côté opposé résistant à la pression (2a) dans un élément d'amortissement élastique (4) dans lequel se trouve un ressort de pression (4a) en élastomère ou en acier et le ressort de pression (4a) dans l'élément d'amortissement élastique (4) peut être interchangé avec d'autres ressorts de pression (4a) de dureté Shore et façonnements différents lors de la production ou également par l'utilisateur et **en ce qu'**entre l'élément de marche élastique (2) et la semelle intermédiaire de chaussure (1), un élément de structure d'amortissement (6) de différentes dureté et propriétés d'amortissement est introduit et, pour limiter le fléchissement de l'élément de marche élastique (2), une ou plusieurs entretoises de forme convexe, concave ou cylindrique (5, 5b) peuvent être placées entre l'élément de marche élastique (2) et la semelle intermédiaire de chaussure (1) ou au niveau de l'élément de marche élastique (2).

4. Semelle intermédiaire de chaussure selon l'une quelconque des revendications 1 à 3, **caractérisée en ce que** la semelle intermédiaire de chaussure (1) est formée d'une semelle intermédiaire de chaussure (1) de dureté moyenne qui présente des propriétés élastiques dans la zone de l'avant-pied et, dans la zone de l'arrière-pied, un élément de marche élastique (3) est inséré, dans la zone du talon dans un logement (1b) au-dessus de la semelle intermédiaire de chaussure (1) et est fermement connecté à la semelle intermédiaire de chaussure et **en ce qu'**il est guidé avec le côté opposé (3a) résistant à la pression dans un élément d'amortissement élastique (4) dans lequel se trouve un ressort de pression (4a) en élastomère ou en acier et le ressort de pression (4a) est guidé dans l'élément d'amortissement élastique (4) contre d'autres ressorts de pression (4a) de dureté Shore et façonnements différents, et **en ce qu'**un élément de structure d'amortissement (6a) de dureté et de propriétés d'amortissement différentes est inséré entre l'élément de marche élastique (3) et la semelle intermédiaire de chaussure (1) et, pour limiter le fléchissement de l'élément de marche élastique (3), une ou plusieurs entretoises de forme convexe, concave ou cylindrique (5a, 5b) sont placées entre l'élément de marche élastique (3) et la semelle intermédiaire de chaussure (1) au niveau de la semelle intermédiaire de chaussure (1) ou de l'élément de marche élastique (3) et **en ce que** l'élément de marche élastique (3) forme une semelle intermédiaire de chaussure commune (1) avec l'élément de marche élastique (2).

5. Semelle intermédiaire de chaussure selon l'une quelconque des revendications précédentes, **caractérisée en ce que** la modification de longueur de l'élément de marche élastique (2) se produisant lors d'une sollicitation par pression de choc au moins de l'élément de marche élastique avant (2) est utilisée dans un élément élastique/amortisseur (4b) en tant que contrainte de traction pour un ressort de traction (18), le ressort de traction (18) s'étend au-dessus de l'élément de marche élastique (2) et est fixé de manière amovible et interchangeable dans la zone (2a, 3a) et à la semelle intermédiaire de chaussure (1) dans la zone de l'avant-pied (19) au moyen d'un raccord à vis (19a) et peut être formé en élastomère ou en acier avec des caractéristiques élastiques et des longueurs différentes, et l'élément de marche élastique (2) s'appuie dans la zone (2a, 3a) sur la semelle intermédiaire de chaussure (1).

6. Semelle intermédiaire de chaussure selon les revendications 4 et 5, **caractérisée en ce que** les éléments de marche élastiques (2, 3) sont divisés dans la zone de l'avant-pied et de l'arrière-pied dans le sens longitudinal de la semelle intermédiaire de chaussure (1) et sont formés de deux ou plusieurs éléments de marche élastiques (2b, 2e) qui présentent leurs propres éléments d'amortissement élastiques (4) ou utilisent un élément d'amortissement élastique commun (4).

7. Semelle intermédiaire de chaussure selon les revendications 4 à 6, **caractérisée en ce qu'**un élément de marche élastique (7) sans élément d'amortissement élastique propre enjambe la zone métatarsienne et est relié de manière fixe mais mobile à mi-hauteur entre le côté inférieur de la semelle intermédiaire de chaussure (1) et la surface de contact au sol des éléments de marche élastiques (2, 3) dans la zone métatarsienne à l'élément de marche élastique (2) et à l'élément de marche élastique (3, 3b) et **en ce que** l'élément d'amortissement élastique (4, 8, 4b, 4c) est couplé au choix à l'élément de marche élastique (2) et (3) et **en ce que** l'élément de marche élastique (7) est plus haut que les éléments de marche élastiques (2, 3, 3b) dans des chaussures de course sportives.

8. Semelle intermédiaire de chaussure selon l'une quelconque des revendications 4 à 7, **caractérisée en ce qu'**un élément de marche élastique (2) est fixé à la pointe de semelle (1a) et un élément de marche élastique (10) est fixé dans la zone métatarsienne et l'élément de marche élastique (3) est fixé à l'extrémité de semelle arrière (1b) de la semelle intermédiaire de chaussure (1) de manière fixe ou enfichable et/ou pivotante, et les éléments de marche élastiques (2, 10, 3) sont couplés individuellement au choix à un élément d'amortissement élastiques (4, 4c, 4b, 8) et **en ce que** l'élément de marche élastique (10) peut être plus haut que les éléments de marche élastiques (2, 3) dans des chaussures de course sportives.

9. Semelle intermédiaire de chaussure selon l'une quelconque des revendications 4 à 8, **caractérisée en ce que** l'élément de marche élastique (2) est fixé à la pointe de semelle (1a) et l'élément de marche élastique (3) est fixé à l'extrémité de semelle arrière (1b) de la semelle intermédiaire de chaussure (1) de manière enfichable et fixe et ou pivotante et **en ce qu'**un élément d'amortissement élastique (8) est placé de manière fixe dans la zone métatarsienne de la semelle intermédiaire de chaussure (1), les ressorts de pression (4a) sont reliés dans l'élément d'amortissement élastique (4) de manière déplaçable en tant que partie libre ou de manière fixe aux éléments de marche élastiques (2, 3) par leurs extrémités libres (2a, 3a) et **en ce que** l'élément d'amortissement élastique (8) est formé d'une partie supérieure et inférieure et est constitué d'une matière plastique coulissante.

10. Semelle intermédiaire de chaussure selon l'une quelconque des revendications précédentes, **caractérisée en ce qu'**un élément de marche élastique (7a) sans élément d'amortissement élastique propre enjambe la zone métatarsienne et est relié de manière fixe mais mobile à mi-hauteur entre le côté inférieur de la semelle intermédiaire de chaussure (1) et la surface de contact au sol des éléments de marche élastique (2, 3) dans la zone métatarsienne à l'élément de marche élastique (2) et à l'élément de marche élastique (3) et à l'élément d'amortissement élastique correspondant (8) et **en ce que** l'élément de marche élastique (7a) peut, dans des cas particuliers, être plus haut que les éléments de marche élastique (2, 3).

11. Semelle intermédiaire de chaussure selon une ou plusieurs revendications précédentes, **caractérisée en ce que** trois éléments de marche élastiques (2, 10, 3) sont reliés entre eux et forment un élément de marche élastique continu (29), et un système d'amortissement de dureté (4, 4c, 4b) reçoit l'élément de marche élastique continu (29) dans la zone du talon au-dessus de la semelle intermédiaire de chaussure (1c), et l'élément de marche élastique (2) est placé de manière enfichable, fixe ou pivotante dans la zone de l'avant-pied à la pointe de semelle (1a), et **en ce que** les deux éléments de guidage (9, 9a) sont fixés à la semelle intermédiaire de chaussure (1) au niveau du point de transition entre la zone de l'avant-pied et la zone métatarsienne et entre la zone métatarsienne et la zone de l'arrière-pied et sont formés d'une partie supérieure et d'une partie inférieure et sont constitués d'une matière plastique coulissante.

12. Semelle intermédiaire de chaussure selon la revendication 11, **caractérisée en ce que** l'élément de marche élastique (2) disposé dans la zone de l'avant-pied est relié à l'élément de marche élastique central (10) par un élément de marche élastique (11) et l'élément de marche élastique central (10) est connecté de manière fixe mais mobile à l'élément de marche élastique arrière (3) par un élément de marche élastique (12) à mi-hauteur entre le côté inférieur de la semelle intermédiaire de chaussure (1) et la surface de contact au sol des éléments de marche élastiques (2, 11, 10, 12, 3), et **en ce que** les éléments de marche élastiques (11 et 10) peuvent, dans des cas particuliers, être plus hauts que les éléments de marche élastiques (2, 12, 3).

13. Semelle intermédiaire de chaussure selon une ou plusieurs revendications précédentes, **caractérisée en ce que** l'élément de marche élastique (2, 2d, 2e, 2b, 3, 3b, 7, 7a, 10, 11, 12, 24, 25, 26, 27) présente, transversalement à l'axe central ou jusqu'à 10 degrés d'écart, une ou plusieurs cavités en forme de gouttière (3b/R) et **en ce que** les éléments de marche élastiques (2, 2d, 2e, 2b, 3, 3a, 7, 7a, 10, 11, 12, 24, 25, 26, 27) présentent une hauteur, une courbure ou un arc différent dans le sens longitudinal ainsi que dans le sens transversal, sont conçus concaves, convexes ou avec un tracé de courbe libre, et les cavités en forme de gouttière (3b/R) s'étendent jusque sous les points les plus bas de la déformation de surface pour que l'élément de marche élastique puisse être fléchi dans le sens longitudinal de la semelle intermédiaire de chaussure (1) malgré sa déformation de surface.

14. Semelle intermédiaire de chaussure selon une ou plusieurs des revendications 3 à 13, **caractérisée en ce que** les éléments de marche élastiques (2, 2a, 2b, 3b, 10, 7a, 7, 24, 25, 26, 27) ou la semelle intermédiaire de chaussure (1) présentent, sur le côté tourné vers un élément de structure d'amortissement (6, 6a, 6b, 6e, 6c, 6d), un ou plusieurs éléments d'écartement (5, 5a, 5b) qui sont concaves ou convexes en forme de bande s'étendant transversalement à l'axe central ou cylindriques et, par des ouvertures dans les éléments de structure d'amortissement (6, 6a, 6e, 6b, 6c, 6d) en cas de choc, la semelle intermédiaire de chaussure (1) et l'élément de marche élastique (2, 2a, 2b, 3b, 10, 7a, 7, 24, 25, 26, 27) se touchent au moyen des éléments d'écartement et **en ce que** la hauteur résiduelle est limitée à environ 35 % de la hauteur totale existante entre la semelle intermédiaire de chaussure (1) et les éléments de marche élastiques, dans laquelle des éléments d'écartement (5, 6a, 6e, 6b, 6c, 6d) disposés en forme de bande transversalement à l'axe central ou de forme cylindrique sont disposés dans l'élément de structure d'amortissement (6, 6a, 6e, 6b, 6c, 6d, 5a, 5b) qui, en cas de choc, empêchent une compression des éléments de structure d'amortissement (6, 6a, 6e, 6b, 6c, 6d) et permettent de maintenir la distance entre la semelle de chaussure et l'élément de marche élastique jusqu'à une hauteur de distance d'env. 35 % de la hauteur totale, et les éléments d'écartement sont formés à partir d'élastomères avec une dureté Shore comprise entre 60 et 90, et dans laquelle les éléments de structure d'amortissement (6, 6a, 6e, 6b, 6c, 6d) sont formés de mousses PU avec une dureté Shore et une viscoélasticité différentes ou par impression 3D de TPU ou de silicone avec une dureté Shore et des propriétés viscoélastiques différentes avec des structures à pores ouverts et/ou spatiales qui sont avantageusement formées en tant que ressorts ondulés de forme hexagonale, et **en ce que** les corps sont fermés par une peau extérieure jusqu'à une membrane d'entrée et de sortie d'air, et **en ce que** la structure technique et de construction est conçue de sorte qu'un déplacement dans la direction tangentielle et verticale soit possible, mais qu'un déplacement transversal par rapport à l'axe central de semelle soit empêché dans une large mesure.

15. Semelle intermédiaire de chaussure selon une ou plusieurs revendications précédentes, **caractérisée en ce que** les éléments de marche élastiques (2, 2a, 2b, 3b, 10, 7a, 7, 24, 25, 26, 27) sont formés d'une matière plastique renforcée par fibres de carbone et leur utilisation différente dans des chaussures de course avec les différentes duretés élastiques exigées est déterminée en fonction des éléments de structure d'amortissement utilisés (6, 6a, 6e, 6b, 6c, 6d) et **en ce que** des éléments de marche élastiques individuels (2, 2a, 2b, 3b, 10, 7a, 7, 24, 25, 26, 27) sont formés au choix en matière plastique à base de TPEE à dureté moyenne lorsque les propriétés d'amortissement et de dureté dans les éléments de structure d'amortissement (6, 6a, 6e, 6b, 6c, 6d) sont adaptées les unes aux autres avec les éléments de marche élastiques et **en ce que** l'élément de marche élastique continu (29), qui est formé à partir de l'élément de marche élastique (2 et 10 et 3), et l'élément de marche élastique continu, qui est formé à partir de l'élément de marche élastique (2, 11, 10, 12 et 3), ont été fabriqués ensemble dans un processus de fabrication.

16. Semelle intermédiaire de chaussure selon une ou plusieurs revendications précédentes, **caractérisée en ce que** les éléments de marche élastiques (2, 2a, 2b, 3b, 10, 7a, 7, 24, 25, 26, 27) présentent une hauteur comprise entre 20 mm et 40 mm en fonction de leur utilisation dans différentes chaussures de sport et de course, la hauteur de certains éléments de marche élastiques se trouvant au niveau de la semelle intermédiaire de chaussure (1) étant choisie de manière différente en termes de hauteur et de dureté par rapport à celle d'autres éléments de marche élastiques placés sur la semelle intermédiaire de chaussure (1), les éléments de marche élastiques (2, 2d, 2b, 2e, 3, 3b, 10, 24, 25, 26 27) présentent, sur leur côté de fixation à la semelle intermédiaire de chaussure (1), différents types de fixation (1a, 1b, 1c, 1d, 1e, 1f) en fonction de l'utilisation prévue, et les éléments de marche élastiques (2, 2d, 2b, 2e, 3, 3b, 10, 24, 25, 26 27) sont conçus différemment dans leurs caractéristiques élastiques et dans leur hauteur de construction et leur façonnement élastique pour des styles de marche et des lieux d'utilisation déterminés.

17. Semelle intermédiaire de chaussure selon l'une quelconque des revendications 2 à 16, **caractérisée en ce que** la semelle intermédiaire de chaussure (1) peut être déviée élastiquement dans la zone de la plante du pied (38) de l'avant-pied, et un élément de marche élastique (2) est monté de manière pivotante par un côté et est introduit fixement au moyen d'une charnière (35) dans un logement (1a) au niveau de la pointe de semelle intermédiaire de chaussure de la semelle intermédiaire de chaussure (1), et l'élément de marche élastique (2) s'appuie avec son côté opposé sur la semelle intermédiaire de chaussure (1) ou sur la bande de limitation de déviation (30) et **en ce que** la bande de limitation de déviation (30) s'étend au-dessus de l'élément de marche élastique (2), est introduite de manière fixe par un côté dans le logement (1a) et s'étend par le côté opposé dans des ouvertures à travers le bord de poussée (31b) sur l'élément de marche élastique (2) et/ou dans des guidages latéraux sur le bord de poussée (31b) au niveau de l'élément de marche élastique (2) dans lesquels les cadres (32c, 32cc) sont guidés et **en ce que** se trouve, dans la bande de limitation de déviation (30) derrière le bord de poussée (31b) sur l'élément de marche élastique (2), un élément élastique/amortisseur (4) agissant comme accumulateur d'énergie avec au moins un ressort de pression (4a) en métal ou en élastomère et qui absorbe, amortit la charge de poussée linéaire du bord de poussée (31b), qui se produit par une charge de choc de l'élément de marche élastique (2) et la compression qui y est liée, et l'emmagasine sous forme d'énergie.

18. Semelle intermédiaire de chaussure selon la revendication 17, **caractérisée en ce que** la bande de limitation de déviation (30), qui est couplée à l'élément de marche élastique (2) par l'intermédiaire de l'accumulateur d'énergie (4), détermine, via la distance en hauteur sélectionnée par rapport à la semelle intermédiaire de chaussure (1), le degré de déviation de la semelle en fonction des courbes caractéristiques élastiques ou duretés Shore utilisées des ressorts de pression dans l'accumulateur d'énergie (4), et **en ce que** la bande de limitation de déviation (30) est constituée de différents matériaux tels que des bandes tissées ou du carbone élastique avec différents degrés de flexibilité, sous forme de bande large avec une section transversale rectangulaire ou des câbles de traction individuels avec une section transversale ronde ou rectangulaire avec des éléments pressés ou injectés pour la fixation à la semelle intermédiaire de chaussure (1) ainsi que pour le logement du ressort de pression en métal ou en élastomère dans l'accumulateur d'énergie (4).

19. Semelle intermédiaire de chaussure selon une ou plusieurs des revendications précédentes, **caractérisée en ce que** l'élément de marche élastique (2) est différent en fonction du type d'utilisation et des différents styles de marche, possède différents façonnements élastiques dans les sens transversal et longitudinal avec différentes courbes caractéristiques élastiques ou duretés Shore et possède en outre différents tracés de courbure ou d'arc en liaison avec différentes hauteurs des différents éléments de marche élastique (2) d'env. 15 mm à 40 mm maximum et est formé de matériaux tels que du carbone ou des matières plastiques à dureté moyenne avec différents degrés de flexibilité, et la liaison à la semelle intermédiaire de chaussure (1) à la pointe de semelle, dans la zone métatarsienne ou à l'extrémité arrière de la semelle intermédiaire de chaussure dans la zone du talon s'effectue de manière pivotante au moyen d'une charnière (35) ou de manière fixe (42) par collage, soudage ou connexions enfichables.
